# EUROPÄISCHE PATENTSCHRIFT

(11) **EP 2 500 754 B1**
(45) Veröffentlichungstag und Bekanntmachung des Hinweises auf die Patenterteilung: **09.03.2016**
(21) Anmeldenummer: 12159388.3
(22) Anmeldetag: 14.03.2012
(51) Int. Cl.: G02B 6/00, F21V 8/00, F21S 8/10

(54) **Beleuchtungseinrichtung für Kraftfahrzeug**
Lighting device for motor vehicle
Dispositif d'éclairage pour véhicule automobile

(30) Priorität: 04.07.2011 DE 102011078607; 15.03.2011 DE 102011005583
(43) Veröffentlichungstag der Anmeldung: 19.09.2012
(73) Patentinhaber: Automotive Lighting Reutlingen GmbH, 72762 Reutlingen (DE)
(72) Erfinder: Zwick, Hubert, 70173 Stuttgart (DE); Boebel, Doris, 70184 Stuttgart (DE); Lampen, Martin, 72072 Tübingen (DE)
(74) Vertreter: DREISS Patentanwälte PartG mbB

(56) Entgegenhaltungen:
- EP-A1- 2 045 633
- DE-A1-102009 012 224
- US-A1- 2006 209 524
- US-A1- 2009 185 389
- US-A1- 2010 157 624
- US-B1- 6 575 584

## Beschreibung

Die vorliegende Erfindung betrifft eine Beleuchtungseinrichtung für ein Kraftfahrzeug nach dem Oberbegriff des Anspruchs 1.

Eine solche Beleuchtungseinrichtung wird von den Erfindern als bekannt vorausgesetzt. Aus der DE 10 2008 048 765 A1 ist eine Beleuchtungseinrichtung bekannt, die einen flächigen Lichtleiter mit zwei langgestreckten Schmalseiten und zwei kurzen Schmalseiten aufweist. Die Fläche kann eine im Raum gekrümmte Form aufweisen. Eine der langen Schmalseiten ist so geformt, dass sie eine Vielzahl von parabelförmigen Einkoppelbereichen aufweist. Jeder der Einkoppelbereiche wird von einer zugeordneten Leuchtdiode (LED) gespeist. Die Leuchtdioden sind auf einer flexiblen Leiterplatte montiert, die von einem Halter in einer vorgegebenen dreidimensionalen Form gehalten wird. Das über die eine langgestreckte Schmalseite eingekoppelte Licht wird über die andere langgestreckte Schmalseite ausgekoppelt. Damit ergibt sich für einen Betrachter das Erscheinungsbild eines wenige Millimeter, zum Beispiel 10 mm breiten, dreidimensional im Raum gekrümmten Lichtbandes.

Der von den Erfindern als bekannt vorausgesetzte Stand der Technik entsteht dadurch, dass man zwei Lichtleiter der in der DE 10 2008 048 765 A1 beschriebenen Art übereinander legt und zu einem einstückig zusammenhängenden Spritzgussteil vereinigt. Auf diese Weise entsteht eine Beleuchtungseinrichtung mit einem ersten Lichtleiter und einem zweiten Lichtleiter, wobei der zweite Lichtleiter der Form des ersten Lichtleiters folgend und benachbart zum ersten Lichtleiter angeordnet ist. Bei dem als bekannt vorausgesetzten Stand der Technik wird der erste Lichtleiter mit weißen LEDs betrieben, während der zweite Lichtleiter mit gelben LEDs betrieben wird.

Im Ergebnis wird damit wahlweise sowohl weißes als auch gelbes Licht abgestrahlt, so dass der als bekannt vorausgesetzte Stand der Technik Blinklichtfunktionen und Tagfahrlichtfunktionen vereinigt.

Bei diesem Stand der Technik ergeben sich hohe Fertigungskosten, da eine Vielzahl von Bauteilen miteinander verbunden werden müssen. Diese Vielzahl umfasst zum Beispiel den Halter für die Platine, die flexible Platine, die Vielzahl von Leuchtdioden und den oder die Lichtleiter, ohne dass diese Aufzählung als abschließend zu verstehen ist. Darüber hinaus ergeben sich auch hohe Teilekosten, da bis zu 50 LEDs verwendet werden und da die Verwendung einer flexiblen Platine erforderlich ist, die sehr teuer ist. Teuer ist auch der massive, im Spritzgussverfahren in zwei Farben sehr aufwändig herzustellende Lichtleiter, für den hier ein Volumen von etwa 400 mm x 20 mm x 50 mm angenommen wird. Auch die minimale Gesamthöhe der beiden benachbarten Lichtbänder mit 2 x 10 mm (10 mm für jedes Lichtband) wird als nachteilig empfunden, da sie die gestalterische Freiheit einengt.

Aus gestalterischen Gründen wird darüber hinaus als nachteilig empfunden, dass das Licht beim Wechsel vom Blinklicht zum Tagfahrlicht und umgekehrt aus wahrnehmbar unterschiedlichen Höhen aus der Beleuchtungseinrichtung austritt. Ferner wird als nachteilig empfunden, dass die bei einer Betrachtung der Lichtbänder wahrnehmbare Helligkeit über der Länge der Lichtbänder variiert. Dies liegt daran, dass man gewissermaßen durch den Lichtleiter hindurch auf eine Reihe von LEDs blickt. Die vor den LEDs liegende Bereiche der Lichtleiter erscheinen hell und werden von dunklen Zwischenbereichen unterbrochen. Bei dem als bekannt vorausgesetzten Stand der Technik ist die Homogenität des Erscheinungsbildes nur durch die Erhöhung der Anzahl der verwendeten LEDs zu verbessern.

Aus der Druckschrift US 2010/157624 ist eine Lichtleiterplatte und ein Hintergrundbeleuchtungsmodul bekannt. Dieser Gegenstand ist dazu eingerichtet, das Licht über die Fläche der Lichtleiterplatte verteilt normal zu dieser Fläche austreten zu lassen. Eine Hintergrundbeleuchtungseinrichtung ist ferner aus der EP 2 045 633 A1 bekannt. Die US 2006/0209524 zeigt eine Licht emittierende Vorrichtung mit einem langen Lichtleiter, der Auskoppelelemente aufweist. Diese sind dazu eingerichtet, Licht quer zum Lichtleiter umzulenken und über eine Längsseite des Lichtleiters austreten zu lassen, die der Längsseite gegenüberliegt, aus der die Auskoppelemente hervor ragen. Aus der US 6,575,584 ist eine Beleuchtungseinrichtung mit einer innere Mikroprismen aufweisenden Lichtleiterplatte bekannt.

Vor diesem Hintergrund besteht die Aufgabe der Erfindung in der Angabe einer Beleuchtungseinrichtung, die diese Nachteile nicht oder zumindest nur in verringerter Form aufweist.

Diese Aufgabe wird mit den Merkmalen des Anspruchs 1 gelost.

Aus diesen Merkmalen ergeben sich die folgenden Unterschiede und Vorteile:
Bei der Erfindung ist es ausreichend, den Lichtleiter so mit Licht zu speisen, dass an den Auskoppelelementen genügend Licht zur Auskopplung zur Verfügung steht. Räumlich verteilte Lichtquellen sind nicht erforderlich. Die Verteilung des Lichtes erfolgt durch den Lichtleiter. Prinzipiell ist dafür eine einzige Lichtquelle pro Lichtleiter ausreichend. Die Erfindung benötigt also insbesondere auch keine Vielzahl von LEDs, die längs des Lichtleiters verteilt sind. Eine flexible Leiterplatte, wie sie beim Stand der Technik zur Kontaktierung räumlich verteilter LEDs verwendet wird, ist daher nicht erforderlich.

Die Funktion der beim als bekannt vorausgesetzten Stand der Technik verwendeten LEDs, an einem bestimmten Punkt im Raum Licht abzustrahlen, wird bei der Erfindung durch die Licht abstrahlende Funktion der Auskoppelelemente ersetzt. Die Auskoppelelemente ersetzen insofern die LEDs. Jedes Auskoppelelement kann insofern als virtuelle Lichtquelle betrachtet werden. Bei der Erfindung wird Licht zu den virtuellen Lichtquellen geführt, während beim als bekannt vorausgesetzten Stand der Technik elektrische Energie zu den LEDs transportiert werden muss. In Bezug auf die Energieverteilung übernimmt der Lichtleiter bei der Erfindung damit die Funktion der flexiblen Leiterplatte des als bekannt vorausgesetzten Standes der Technik.

Die Höhe der Auskoppelelemente bestimmt die Breite des resultierenden Lichtbandes. Diese Höhe ist bei der Erfindung von den übrigen Abmessungen des Lichtleiters unabhängig frei wählbar und kann zum Beispiel auf Werte von weniger als 3 mm abgesenkt werden, so dass sich eine entsprechend geringe Breite des Lichtbandes ergibt. Dabei ist jedoch zu beachten, dass die gesetzlich vorgeschriebene Mindestfläche der leuchtenden Fläche 2500 mm² beträgt. Bei vorgegebener Länge des Lichtbandes ergeben sich somit Einschränkungen für die Breite des Lichtbandes. Bei einer vorgegebenen Länge von 400 mm muss die Breite zum Beispiel im Durchschnitt wenigstens 6,25 mm betragen. Ein wesentlicher Vorteil der Erfindung ist jedoch, dass die Breite des Lichtbandes durch eine entsprechende Wahl der Höhe der Auskoppelelemente ohne Rücksicht auf für die Stabilität der Lichtleiteranordnung erforderliche Mindeststärken des übrigen Lichtleiters gewählt werden kann.

Im direkten Vergleich mit dem als bekannt vorausgesetzten Stand der Technik ergeben sich deutlich reduzierte Fertigungskosten durch die verringerte Teileanzahl, da weniger Teile zu montieren sind.

In einer weiteren Variante können zwei Leuchtdioden auf einer Platine angebracht werden, die jeweils in einen Lichtleiter einstrahlen. Diese Platine kann mit Aufnahmen oder Befestigungsmöglichkeiten für die Lichtleiter versehen sein. Dies hat den Vorteil, dass der Lichtleiter einfach zur Leuchtdiode ausgerichtet werden kann. Bei beidseitiger Einstrahlung kann die Leuchteinheit derart gestaltet werden, dass Lichtleiter und Platinen eine eigenständige Baugruppe bilden, die einfach im Scheinwerfer zu montieren ist.

Darüber hinaus ergeben sich auch wesentlich geringere Teilekosten, da nur wenige LEDs, im Extremfall nur eine LED pro Lichtleiter, erforderlich sind. Daher ist auch nur eine kleine Platine erforderlich, die auch nicht flexibel sein muss und die daher deutlich preiswerter ist als die beim als bekannt vorausgesetzten Stand der Technik erforderliche vergleichsweise große und flexible Platine.

Die beiden bei der Erfindung benötigen Lichtleiter sind einfache Spritzgussteile, die zum Beispiel auch ein wesentlich geringeres Materialvolumen aufweisen können, als dies beim als bekannt vorausgesetzten Stand der Technik der Fall ist. Dies führt zu einer massiven Gewichtseinsparung, die auch unter dem Gesichtspunkt einer angestrebten Verringerung der CO₂-Emissionen von Kraftfahrzeugen vorteilhaft ist.

Über der Länge des Lichtleiters ist der unerwünschte Effekt einer variierenden Helligkeit bei der Erfindung schwächer ausgeprägt als bei dem als bekannt vorausgesetzten Stand der Technik. Dies ergibt sich daraus, dass die Auskoppelelemente dichter benachbart angeordnet werden können als LEDs. Die Auskoppelelemente können zum Beispiel in einem Abstand von weniger als 3 mm angeordnet werden. Bei einer Betrachtung, die aus einigen Metern Entfernung erfolgt, ist wird dieser Abstand vom menschlichen Sehvermögen nicht mehr aufgelöst, so dass die leuchtenden Lichtaustrittsflächen der Auskoppelelemente das Erscheinungsbild eines durchgehend homogen erleuchteten Bandes zeigen.

Im Ergebnis wird mit der Erfindung eine visuell einheitlich wirkende Lichtaustrittsfläche erzielt, die über zwei getrennte und unabhängige Wege mit Licht versorgt wird. Mit diesen zwei Wegen können lichttechnische Eigenschaften des Systems in vielfältiger Weise kombiniert werden. Zum Beispiel lassen sich zwei unterschiedliche Beleuchtungsaufgaben kombinieren, oder zwei Lichtfarben, Lichtvolumen oder Lichtverteilungen. Genauso lassen sich diese unterschiedlichen Eigenschaften auf vielfache Art miteinander kombinieren. Beispiele unterschiedlicher Beleuchtungsaufgaben sind zum Beispiel Positionslicht und Tagfahrlicht, die beide weißes Licht verwenden. Beispiele unterschiedlicher Lichtfarben ergeben sich für Tagfahrlicht und Blinklicht, wobei Tagfahrlicht weißes Licht und Blinklicht gelbes Licht verwendet. Das Lichtvolumen lässt sich zum Beispiel dadurch verändern, dass entweder nur einer oder aber beide Lichtleiter durch Einschalten ihrer jeweiligen Lichtquelle zur Lichtabstrahlung aktiviert werden. Auf die gleiche Art und Weise lassen sich zum Beispiel zwei verschiedene Lichtverteilungen realisieren, wenn der eine der beiden Lichtleiter Licht vorzugsweise in eine andere Richtung abstrahlt als der andere Lichtleiter.

Eine bevorzugte Ausgestaltung zeichnet sich dadurch aus, dass der erste Lichtleiter und der zweite Lichtleiter als Teilvolumina eines einstückig zusammenhängenden Lichtleitervolumens realisiert sind.

Bevorzugt ist auch, dass das erste Teilvolumen eine erste Längsseite mit Auskoppelelementen aufweist, die aus der ersten Längsseite herausragen, das zweite Teilvolumen eine zweite Längsseite mit Auskoppelelementen aufweist, die aus der zweiten Längsseite herausragen, wobei die Auskoppelelemente beider Teilvolumina miteinander identisch sind.

Bevorzugt ist auch, dass die Beleuchtungseinrichtung dazu eingerichtet ist, dass sowohl das erste Teilvolumen als auch das zweite Teilvolumen sowohl an einer ersten Stirnseite, beziehungsweise an einem ersten Ende, als auch an einer zweiten Stirnseite, beziehungsweise an einem zweiten Ende, Licht eingekoppelt bekommt.

Bevorzugt ist auch, dass vier LEDs als Lichtquellen vorgesehen sind, von denen jede an einer Lichteintrittsfläche, also einer Stirnseite, an einem der beiden Enden der Teilvolumina so angeordnet ist, dass ihr Licht über die zugehörige Lichteintrittsfläche in das Lichtleitervolumen eingekoppelt wird.

Bevorzugt ist auch, dass die Auskoppelelemente zwei Arten von Umlenkflächen aufweisen, je eine Art für jedes der beiden Licht einkoppelnde Lichtquellen aufweisenden Enden, wobei die einen Umlenkflächen dem einen Ende zugewandt sind, während die anderen Umlenkflächen dem anderen Ende zugewandt sind.

Bevorzugt ist auch, dass das Lichtleitervolumen dazu eingerichtet ist, nur an einem Ende seiner beiden Enden Licht eingekoppelt zu bekommen.

Bevorzugt ist auch, dass das Lichtleitervolumen lediglich eine Art von Auskoppelflächen aufweist, die alle dazu eingerichtet sind, Licht, das von einem Ende des Lichtleitervolumens her in das Lichtleitervolumen eingespeist wird und in die Auskoppelelemente eintritt, zu den Lichtaustrittsflächen der Auskoppelelemente umzulenken, über die das Licht aus dem Lichtleitervolumen austritt.

Bevorzugt ist auch, dass die einzelnen Lichtaustrittsflächen durch Ausnehmungen voneinander getrennt sind.

Bevorzugt ist auch, dass die Beleuchtungseinrichtung eine erste Lichtquelle aufweist, die weißes Licht emittiert und in den ersten Lichtleiter einkoppelt und eine zweite Lichtquelle aufweist, die weißes Licht emittiert und in den zweiten Lichtleiter einkoppelt, und dass die erste Lichtquelle und die zweite Lichtquelle so angeordnet sind, dass ihr Licht in zueinander entgegengesetzten Richtungen durch die Lichtleiter propagiert.

Bevorzugt ist auch, dass die Beleuchtungseinrichtung dazu eingerichtet ist, dass die Lichteinkopplung in die beiden Lichtleiter so variierbar ist, dass in einem ersten Betriebszustand Licht nur in einen der beiden Lichtleiter eingekoppelt wird, während in einem zweiten Betriebszustand Licht in beide Lichtleiter eingekoppelt wird.

Bevorzugt ist auch, dass die beiden Lichtquellen, separat einschaltbar und ausschaltbar sind.

Bevorzugt ist auch, dass eine Flächennormale einer Umlenkfläche des Auskoppelelements eine Winkelhalbierenden des Winkels zwischen einem auf die Umlenkfläche einfallenden Strahl und dem von der Umlenkfläche wegführenden, reflektierten Strahl bildet.

Bevorzugt ist auch, dass die Umlenkflächen mit einem reflektierenden Belag beschichtet sind.

Bevorzugt ist auch, dass ein solcher Belag eine aufgedampfte metallische Schicht aufweist.

Bevorzugt ist auch, dass die Beleuchtungseinrichtung wenigstens einen Lichtleiter aufweist, der eine Lichteintrittsfläche und eine Lichtaustrittsfläche aufweist, wobei die Lichteintrittsfläche so angeordnet ist, dass sie von Lichtaustrittsflächen der Auskoppelelemente des ersten Lichtleiters und des zweiten Lichtleiters beleuchtet wird.

Bevorzugt ist auch, dass der Lichtleiter einen sich in der Propagationsrichtung des durch den Lichtleiter propagierenden Lichtes aufweitenden Querschnitt besitzt.

Bevorzugt ist auch, dass der Querschnitt des Lichtleiters trapezförmig ist.

Bevorzugt ist auch, dass die Lichteintrittsfläche der Vorsatzoptik eine Breite besitzt, die dem Abstand zwischen den beiden Lichtleitern entspricht oder nur weniger als 15% größer als dieser Abstand ist.

Bevorzugt ist auch, dass die Lichteintrittsfläche und/oder die Lichtaustrittsfläche des Lichtleiters Streuoptiken aufweist.

Bevorzugt ist auch, dass die das Licht leitenden Lichtleiter des Lichtmoduls hinter einem Bezel angeordnet sind, der eine ein Fenster bildende Öffnung vor den im Spalt zwischen den beiden Lichtleitern liegenden Auskoppelelementen bildet.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei zeigen, jeweils in schematischer Form:
- Figur 1: ein Ausführungsbeispiel der Erfindung in Form einer Beleuchtungseinrichtung für ein Kraftfahrzeug;
- Figur 2: eine perspektivische Darstellung eines Ausführungsbeispiels eines Lichtleiters aus der Fig. 1;
- Figur 3: eine Vorderansicht des Gegenstands der Fig. 2;
- Figur 4: eine Draufsicht auf den Gegenstand der Fig. 2;
- Figur 5: eine Seitenansicht des Gegenstandes der Fig. 2;
- Figur 6: eine perspektivische Darstellung eines Lichtmoduls aus der Fig. 1;
- Figur 7: als Geraden angenäherte Abschnitte eines langstreckten und gekrümmten Lichtleiters, die um eine zur gewünschten Lichtabstrahlrichtung parallele Drehachse gegeneinander verdreht sind;
- Figur 8: als Geraden angenäherte Abschnitte eines Lichtleiters, dessen Krümmungsradius in der Lichtabstrahlrichtung liegt;
- Figur 9: eine weitere Ausgestaltung, die sich durch eine Vorsatzoptik auszeichnet;
- Figur 10: eine Ausgestaltung, bei der jeweils ein Auskoppelelement des ersten Lichtleiters und ein Auskoppelelement des zweiten Lichtleiters ein Paar von Auskoppelelementen bilden;
- Figur 11: eine Ausgestaltung, bei der die Auskoppelelemente eines Lichtleiters versetzt zu den Auskoppelelementen des anderen Lichtleiters angeordnet sind;
- Figur 12: eine Ausgestaltung, bei der sich die Auskoppelelemente eines Lichtleiters in ihrer Größe von den Auskoppelelementen des anderen Lichtleiters unterscheiden;
- Figur 13: eine Ausgestaltung, bei der der Abstand zwischen Auskoppelelementen eines Lichtleiters voneinander nicht konstant ist;
- Figur 14: zeigt eine Ausgestaltung, bei der sich die Auskoppelelemente des einen Lichtleiters in ihrer Größe von den Auskoppelelementen des anderen Lichtleiters unterscheiden;
- Figur 15: eine Ausgestaltung, bei der die Größen und Formen der Auskoppelelemente eines Lichtleiters jeweils gleich sind, während sich die Größe und Form eines Auskoppelelements des einen Lichtleiters von der Größe und Form des anderen Lichtleiters unterscheidet;
- Figur 16: eine Ausgestaltung, bei der der erste Lichtleiter und der zweite Lichtleiter als Teilvolumina eines einstückig zusammenhängenden Lichtleitervolumens realisiert sind; und
- Figur 17: eine weitere Ausgestaltung eines einstückig zusammenhängenden Lichtleitervolumens.

Dabei zeigen gleiche Bezugszeichen in verschiedenen Figuren jeweils gleiche oder zumindest ihrer Funktion nach gleiche Elemente.

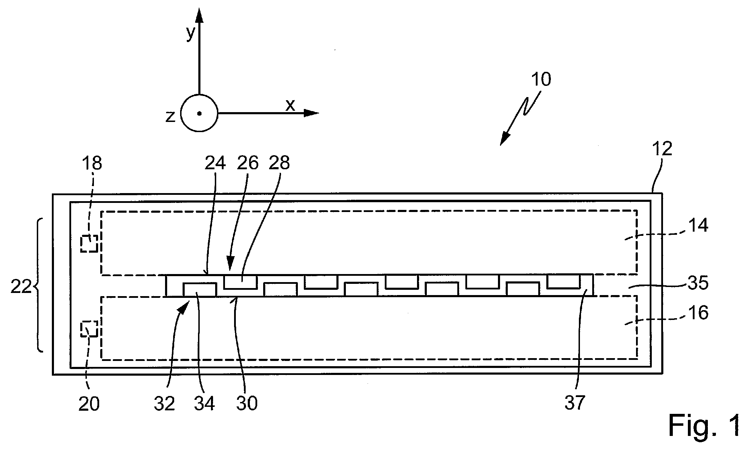

Fig. 1 zeigt im Einzelnen eine Vorderansicht einer Beleuchtungseinrichtung 10 für ein Kraftfahrzeug mit einem Gehäuse 12. Die in der Figur 1 dargestellte x-Richtung gibt eine Richtung an, die zum Beispiel parallel zu einer Querachse des Kraftfahrzeugs liegt. Die y-Richtung liegt zum Beispiel parallel zur Hochachse des Kraftfahrzeugs und die z-Richtung entspricht der Lichtabstrahlrichtung.

Im Fall der Figur 1 blickt der Betrachter auf die durch eine transparente Abdeckscheibe abgedeckte Lichtaustrittsöffnung der Beleuchtungseinrichtung 10. Die Beleuchtungseinrichtung 10 weist einen ersten Lichtleiter 14 und einen zweiten Lichtleiter 16 auf, der der Form des ersten Lichtleiters folgend gestaltet und benachbart zum ersten Lichtleiter 14 verlaufend angeordnet ist. Bei dem in der Figur 1 dargestellten Gegenstand verlaufen die Lichtleiters 14, 16 jeweils geradlinig. Die Erfindung ist aber nicht auf solche Ausgestaltungen beschränkt. Die Lichtleiter 14, 16 verlaufen bevorzugt im Raum gekrümmt, um gestalterischen Vorgaben bei der Gestaltung der Leuchten zu folgen.

Der erste Lichtleiter 14 wird von einer ersten Lichtquelle 18 gespeist, die in der dargestellten Ausgestaltung an einer Stirnseite des ersten Lichtleiters 14 angeordnet ist. Analog wird der zweite Lichtleiter 16 von einer zweiten Lichtquelle 20 gespeist, die an einer Stirnseite des zweiten Lichtleiters 16 angeordnet ist.

Bei der ersten Lichtquelle 18 und der zweiten Lichtquelle 20 handelt es sich bevorzugt jeweils um eine Halbleiterlichtquelle, insbesondere um eine Leuchtdiode oder eine Anordnung aus mehreren Leuchtdioden. Bei der Lichtdiode oder den Leuchtdioden handelt es sich zum Beispiel um LEDs mit planaren und quadratischen Lichtaustrittsflächen von 1 mm Kantenlänge. Je nachdem, welche Lichtfunktion erfüllt werden soll, werden weiß leuchtende, gelb leuchtende oder rot leuchtende LEDs verwendet.

Der erste Lichtleiter 14 bildet zusammen mit der ersten Lichtquelle 18, dem zweiten Lichtleiter 16 und der zweiten Lichtquelle 20 ein Lichtmodul 22, das in einem Gehäuse einer separaten Leuchte oder zusammen mit anderen Lichtmodulen in einer weitere Lichtfunktionen erfüllenden Leuchte oder einem Frontscheinwerfer untergebracht ist. Das Gehäuse kann auch eine Karosserieteil sein, zum Beispiel die Verkleidung eines Außenspiegels bei einer Blinkleuchte.

Die Stirnseiten der Lichtleiter 14, 16 bilden dabei zusammen mit den Längsseiten der Lichtleiter 14, 16 die Oberfläche der Lichtleiter 14, 16. Die Längsseiten der Lichtleiter 14, 16 bilden eine Mantelfläche.

Der erste Lichtleiter 14 weist eine erste Längsseite 24 mit ersten Auskoppelelementen 26 auf. Dabei wird hier unter einer Längsseite eine Seite des Lichtleiters 14, 16 verstanden, deren Länge größer als eine Breite und größer als eine Tiefe des Lichtleiters 14, 16 ist. Die Breite des Lichtleiters 14, 16 würde beim in der Figur 1 dargestellten Gegenstand der Höhe in y-Richtung entsprechen, während die Tiefe entlang der z-Richtung gemessen werden würde. Die ersten Auskoppelelemente 26 ragen aus der ersten Längsseite 24 heraus und weisen erste Lichtaustrittsflächen 28 auf. Dabei weist bevorzugt jeweils ein Auskoppelelement 26 eine Lichtaustrittsfläche 28 auf.

Der zweite Lichtleiter 16 weist eine zweite Längsseite 30 mit zweiten Auskoppelelementen 32 auf. Die zweiten

Auskoppelelemente 32 ragen aus der zweiten Längsseite 30 heraus und weisen zweite Lichtaustrittsflächen 34 auf. Auch hier gilt, dass bevorzugt jeweils ein Auskoppelelement 32 eine Lichtaustrittsfläche 34 aufweist.

Die ersten Auskoppelelemente 28 sind über die erste Längsseite 24 des ersten Lichtleiters 14 verteilt angeordnet. Dabei liegen die ersten Auskoppelelemente 28 bevorzugt in einer Reihe. Die Anordnung in einer Reihe folgt dabei bevorzugt einer Führungslinie des Lichtleiters. Dabei wird unter der Führungslinie eine gedachte Linie verstanden, die im Inneren des Lichtleiters liegt und die der äußeren Form des Lichtleiters folgt. Dabei sind die Auskoppelelemente des einen Lichtleiters in unmittelbarer Nähe zu den Auskoppelelementen des anderen Lichtleiters angeordnet. Analog sind die zweiten Auskoppelelemente 32 über die zweite Längsseite 30 des zweiten Lichtleiters 16 verteilt angeordnet. Auch hier gilt, dass die zweiten Auskoppelelemente 32 bevorzugt in einer Reihe liegen.

Beide Lichtleiter liegen damit der Form des jeweils anderen Lichtleiters folgend nebeneinander und können dabei komplexe Krümmungen entlang ihrer Längsrichtung oder Führungslinie aufweisen, ohne dass dies Einbußen bei der Beleuchtungsqualität verursacht.

Die beiden Lichtleiter 14 und 16 werden in der dargestellten Ausgestaltung weitgehend von einem Bezel 35 verdeckt, dass lediglich ein Sichtfenster 37 freilässt, in dem die Lichtaustrittsflächen 28 und 34 der Reihen von Auskoppelelementen 26 und 32 sichtbar sind.

In der Ausgestaltung nach der Fig. 1 weisen die Auskoppelelemente 26 und 32 der beiden Reihen von Auskoppelelementen die gleiche Größe auf. Der Abstand von zwei benachbarten Auskoppelelementen, die sich in einer Reihe aus einer Längsseite eines der Lichtleiter 14, 16 erheben, ist bei der Ausgestaltung nach der Fig. 1 mindestens so groß wie die Breite einer Lichtaustrittsfläche der Auskoppelelemente. Dadurch passt ein Auskoppelelement eines der beiden Lichtleiter 14, 16 jeweils in eine Lücke zwischen zwei benachbarten Auskoppelelementen des jeweils anderen Lichtleiters 16, 14. Diese Dimensionierung der Abmessungen der Auskoppelelemente und ihrer Abstände erlaubt es, die zweite Längsseite 30 so nahe an der ersten Längsseite 24 anzuordnen, dass sich die Auskoppelelemente 26, die sich aus der ersten Längsseite 24 des ersten Lichtleiters 14 erheben, mit den Auskoppelelementen 32, die sich aus der zweiten Längsseite 30 des zweiten Lichtleiters 16 erheben, reißverschlussartig verzahnen.

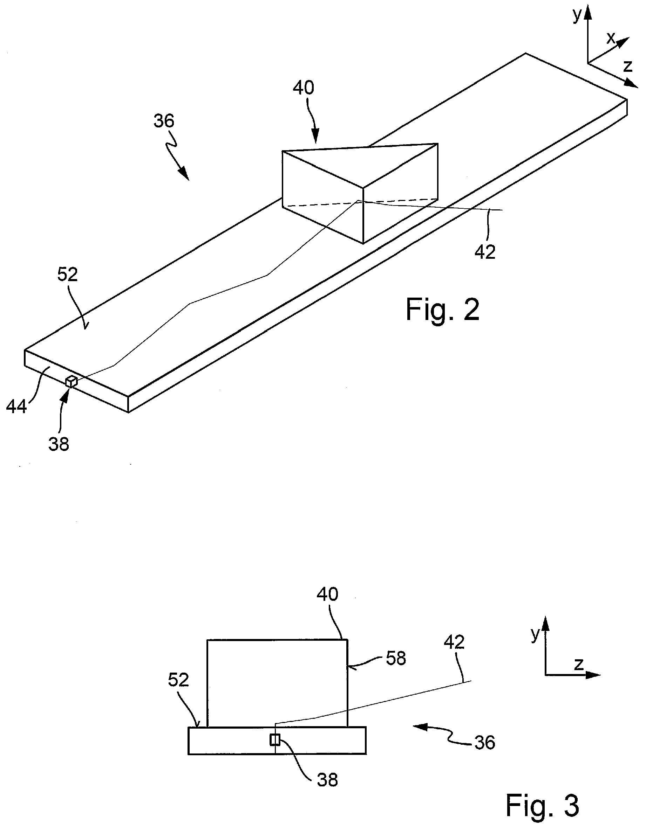

Die Einkopplung des Lichtes über die jeweilige Stirnseite der Lichtleiter 14, 16 erfolgt so, dass das Licht der langgestreckten Form des jeweiligen Lichtleiters 14, 16 folgend durch den jeweiligen Lichtleiter 14, 16 propagiert und dabei insbesondere an den Reihen von Auskoppelelementen 26, 32 entlang läuft. Das im jeweiligen Lichtleiter 14, 16 propagierende Licht erfährt an den Wänden des jeweiligen Lichtleiters 14, 16 interne Totalreflexionen, wobei es jeweils seine Ausbreitungsrichtung nach dem Reflexionsgesetz ändert. Ein Teil des im jeweiligen Lichtleiter 14, 16 propagierenden Lichts gelangt dabei auf Grund seiner Ausbreitungsrichtung in die aus der jeweiligen Längsseite 24, 30 herausragenden Auskoppelelemente 26, 32 und wird über die zugehörigen Lichtaustrittsflächen 28, 34 ausgekoppelt. Dies wird weiter unten noch näher unter Bezug auf die Figuren 2 bis 5 an einem allgemeinen Beispiel noch näher erläutert.

Bei der Beleuchtungseinrichtung 10 handelt es sich bevorzugt um eine Tagfahrlichtleuchte, ein separates Blinklicht, ein hochgesetztes Bremslicht oder eine andere, Signalfunktionen erfüllende Leuchte. Bevorzugt ist auch dass die Beleuchtungseinrichtung 10 zwei Lichtfunktionen erfüllt, beispielsweise in dem sie ein Tagfahrlicht und ein Blinklicht bereitstellt. In einer zur Ausführung als separate Leuchte alternativen Ausgestaltung kann das Lichtmodul auch mit Scheinwerferlichtfunktionen in einen Frontscheinwerfer integriert sein. Die erfindungsgemäße Beleuchtungseinrichtung kann insofern entweder ein Frontscheinwerfer oder eine Leuchte sein. Frontscheinwerfer dienen zur Beleuchtung der Fahrbahn oder von unbeleuchteten Objekten im Fahrweg, während Leuchten die Funktion haben, andere Verkehrsteilnehmer auf das Kraftfahrzeug oder das Verhalten des Kraftfahrzeugs aufmerksam zu machen.

Die Figuren 2 bis 5 zeigen im Einzelnen einen Lichtleiter 36, eine Lichtquelle 38, ein Auskoppelelement 40 des Lichtleiters 36 und einen Lichtstrahl 42. Die Lichtquelle 38 ist bevorzugt eine Halbleiterlichtquelle, die Licht in einen Halbraum abstrahlt. Sie ist bevorzugt dicht vor einer Lichteintrittsfläche 44 des Lichtleiters 36 angeordnet, so dass der größte Teil des von ihr emittierten Lichtes in das Volumen des Lichtleiters 36 eingekoppelt wird. Die Lichteintrittsfläche 44 ist in dieser Ausgestaltung eine Stirnseite des Lichtleiters 36. Das eingekoppelte Licht breitet sich dort um eine Hauptausbreitungsrichtung herum aus, die durch die Geometrie des Lichtleiters 36 vorgegeben wird. In dem dargestellten Ausführungsbeispiel entspricht die Hauptausbreitungsrichtung der x-Richtung, da der langgestreckte Lichtleiter 36 längs dieser x-Richtung ausgerichtet ist. Die um die Hauptausbreitungsrichtung herum erfolgende Ausbreitung des Lichtes ergibt sich durch einfache oder mehrfache interne Totalreflexionen des Lichtes an Grenzflächen des Lichtleiters zu Medien mit geringerer Brechzahl. Mit solchen Totalreflexionen wird Licht, das aus dem Volumen heraus auf die Grenzflächen auftrifft, in das Volumen zurückreflektiert.

Diese zwischen einer Einkopplung von Licht in den Lichtleiter und einer Auskopplung von Licht aus dem Lichtleiter an Transportflächen des Lichtleiters auftretende interne Totalreflexion unterscheidet Lichtleiter zum Beispiel von Linsen. Bei Linsen wird das Licht beim Eintritt in das transparente Material der Linse gebrochen. Danach propagiert das Licht in dem Material der Linse auf direktem Wege und damit insbesondere ohne dass es interne Totalreflexionen an Grenzflächen der Linse erfährt, zur Lichtaustrittsfläche, wo es unter erneuter Lichtbrechung ausgekoppelt wird.

Bei einer Linse durchlaufen die Strahlen, die an einer Abbildung beteiligt sind, die vorgegebenen optischen Flächen in einer festgelegten Reihenfolge. Das gilt auch wenn mehrere Linsen und / oder Reflektoren bzw. Spiegel beteiligt sind. Bei dem hier vorgestellten Lichtleiter gibt es Strahlen, die direkt von der Einkoppelfläche zum Auskoppelelement gelangen und es gibt Strahlen, die einmal oder mehrmals reflektiert werden, bevor sie ins Auskoppelelement eintreten. Für den hier vorgestellten Lichtleiter ist es wesentlich, dass Licht durch den Lichtleiter an das Auskoppelelement gelangt. Der Weg, den das Licht dabei im Lichtleiter durchläuft und die an der Lichtleitung beteiligten Flächen sowie die Anzahl der Reflexionen sind dagegen von untergeordneter Bedeutung.

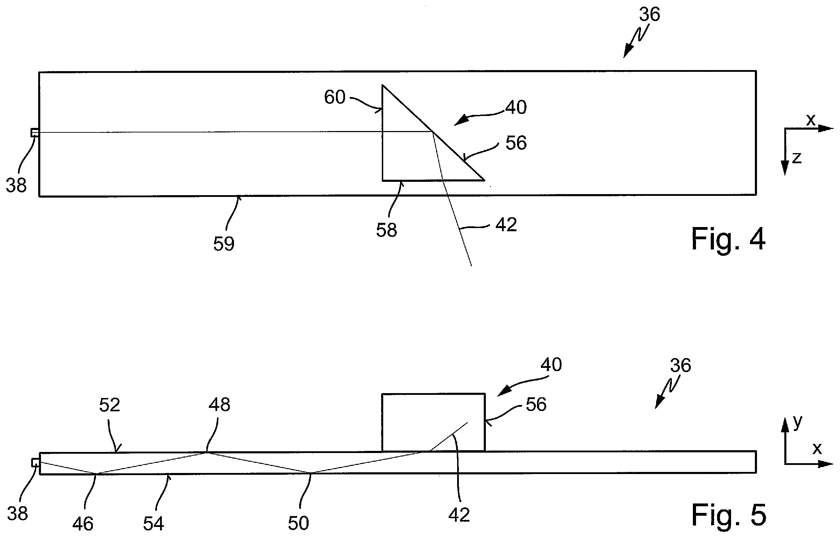

Ein in den Figuren 2 bis 5 als Beispiel betrachteter Lichtstrahl 42 der Lichtquelle 38 tritt über die Lichteintrittsfläche 44 in das Volumen des Lichtleiters 36 ein und besitzt dabei zunächst Richtungskomponenten in x-Richtung und y-Richtung. Die in der Figur 4 dargestellte Draufsicht zeigt, dass der Lichtstrahl 42 zunächst in x-Richtung geradlinig verläuft. Die in der Figur 5 dargestellte Seitenansicht zeigt, wie der Lichtstrahl 42 dabei durch interne Totalreflexionen 46, 48, 50, die an als Transportflächen dienenden Bereichen von Längsseiten 52, 54 des Lichtleiters 36 erfolgen, an das Volumen des Lichtleiters 36 gebunden bleibt und in diesem Volumen um die Hauptausbreitung x herum weiterläuft. Dabei erreicht der Lichtstrahl 42 das Auskoppelelement 40.

Wie die Figuren 2, 3 und 5 zeigen, ragt das Auskoppelelement 40 quer zu der Hauptausbreitungsrichtung x aus einer Längsseite 52 des lichtleitenden Volumens des Lichtleiters 36 heraus. Das Auskoppelelement 40 ist bevorzugt ein Teil des Lichtleiters 36, so dass das Volumen des Lichtleiters 36 in das Volumen des Auskoppelelements 40 übergeht, ohne dass sich zwischen diesen beiden Volumina eine Grenzfläche ausbildet. Als Folge tritt Licht, wie das Licht des Lichtstrahls 42, das aus dem Inneren des Licht leitenden Volumens auf die Grundfläche des Auskoppelelements 40 trifft, zunächst durch diese Grundfläche hindurch in das aus der Längsseite 52 herausragende Volumen des Auskoppelelements 40 ein und kehrt nicht mehr in das übrige Lichtleitervolumen, also das Volumen des Lichtleiters 36 ohne das Auskoppelelement 40, zurück. Dies ist insbesondere aus der Figur 5 ersichtlich. Die Flächen 56 und 58 dienen dabei im Wesentlichen zur Umlenkung des Lichtbündels beispielsweise in die Fahrtrichtung des Fahrzeugs. Im Zusammenwirken mit der Geometrie des Einkoppelbereichs erzeugt das Licht, das die Auskoppelelemente verlässt, die Lichtverteilung der Lichtfunktion. An der Erzeugung der Lichtverteilung kann auch noch ein Lichtleiter beteiligt sein, wie er weiter oben unter Bezug auf den Stand der Technik beschrieben wurde.

Das Auskoppelelement 40 besitzt in der Ausgestaltung, die in den Fig. 2 bis 5 dargestellt ist, eine dreieckige, von Geraden begrenzte Grundfläche, die insbesondere aus den Figuren 2 und 4 ersichtlich ist. Im dargestellten Ausführungsbeispiel handelt es sich um ein rechtwinkliges Dreieck, ohne dass die Erfindung auf eine solche spezielle Geometrie beschränkt ist. Das über die dreieckige Grundfläche aus dem übrigen Lichtleiter 36 in das Auskoppelelement 40 eingetretene Licht wird anschließend von der über der Hypotenuse der dreieckigen Grundfläche stehenden Grenzfläche 56 reflektiert, wobei diese Reflexion bevorzugt eine interne Totalreflexion ist. Für eine solche Reflexion ist keine reflektierende Beschichtung der Grenzfläche 56 erforderlich.

Im Rahmen einer dazu alternativen oder ergänzenden Ausgestaltung ist die Grenzfläche 56 mit einem reflektierenden Material beschichtet. Das reflektierende Material ist bevorzugt eine dünne Metallschicht. Mit dieser Ausgestaltung kann auch noch Licht reflektiert werden, das die Bedingungen einer internen Totalreflexion an der Grenzfläche 56 nicht erfüllt. Gegenüber einer Ausgestaltung, die keine reflektierende Beschichtung vorsieht, müssen bei der Ausgestaltung mit der reflektierenden Beschichtung jedoch Energieverluste des Lichtes in Kauf genommen werden.

In jedem Fall wird das aus dem Volumen des Lichtleiters 36 auf die Grenzfläche 56 einfallende Licht dort so umgelenkt, dass es in einem steilen Winkel auf eine weitere Grenzfläche 58 fällt, die im dargestellten Ausführungsbeispiel parallel zu einer Längsseite 59 des Lichtleiters 36 ausgerichtet ist. Dabei wird unter einem steilen Winkel hier jeder Winkel zwischen dem einfallenden Lichtstrahl und der Flächennormalen der Grenzfläche 58 verstanden, der kleiner als der Grenzwinkel der internen Totalreflexion ist. Das bedeutet, dass das unter steilen Winkeln auf die weitere Grenzfläche 58 einfallende Licht dort keine internen Totalreflexionen erfährt, sondern dass es über die weitere Grenzfläche 58 aus dem Auskoppelelement 40 und damit aus dem Lichtleiter 36 austritt.

Die weitere Grenzfläche 58 stellt insofern eine Lichtaustrittsfläche des Lichtleiters 36 dar. Die Grenzfläche 56 stellt dagegen ein Störelement dar, das einfallendes Licht so umlenkt, dass das umgelenkte Licht beim nächsten Auftreffen auf eine Grenzfläche des Lichtleiters 36 ausgekoppelt wird. Die Grenzfläche 56 bildet zusammen mit der weiteren Grenzfläche 58 zumindest einen Teil der Grenzfläche des Auskoppelelements 40. Das in den Figuren 2 bis 5 dargestellte Ausführungsbeispiel zeichnet sich insbesondere dadurch aus, dass das Auskoppelelement 40 aus einer Längsseite 52 des lichtleitenden Volumens des Lichtleiters 36 herausragt und dass die Lichtaustrittsfläche 58 einen Teil der Grenzfläche des Auskoppelelements 40 bildet. Die als Störelement dienende Grenzfläche 56 und die als Lichtaustrittsfläche dienende weitere Grenzfläche 58 liegen auf derselben Längsseite 52 des Lichtleiters 36.

Die verbleibende Grenzfläche 60, die in der Figur 4 über einer Kathete der Grundfläche des Auskoppelelements 40 liegt, hat dagegen für das Auskoppeln des von links her propagierenden Lichtes keine Bedeutung.

Die Grundfläche des Auskoppelelements 40 liegt in der Längsseite 52 des Lichtleiters 36. Die äußere Form der Einheit aus dem Auskoppelelement 40 und dem Lichtleiter 36 entsteht gewissermaßen dadurch, dass die Form des Auskoppelelements 40 gedanklich auf die Längsseite 52 aufgesetzt wird und dadurch die Grundfläche definiert. Diese Überlegung dient jedoch lediglich der Veranschaulichung der Grundfläche. Reale Lichtleiter werden bevorzugt als einstückige bauliche Einheiten aus einem oder mehreren Auskoppelelementen 40 mit dem übrigen lichtleitenden Volumen des Lichtleiters 36 hergestellt, insbesondere durch ein Spritzgussverfahren mit PMMA oder PC als transparentem Lichtleitermaterial.

Wenn diese in der Längsseite 52 liegende Grundfläche beim Stand der Technik als Lichtaustrittsfläche dienen sollte, müsste ein auf der gegenüberliegenden Längsseite 54 liegender Flächenbereich Störelemente aufweisen, die das Licht steil zu der in der Längsseite 52 liegenden Grundfläche hin umlenken würden.

Dieser in der Längsseite 54 liegende Flächenbereich könnte daher beim Stand der Technik nicht oder nur sehr eingeschränkt als Transportfläche dienen.

Um dies zu kompensieren, müsste die in der Längsseite 52 liegende Grundfläche beim Stand der Technik nicht nur die Funktion als Lichtaustrittsfläche erfüllen, sondern sie müsste zusätzlich auch noch als Transportfläche dienen.

Dies ist bei der Erfindung nicht der Fall. Bei der Erfindung kann der genannte Flächenbereich der Längsseite 54 von Störelementen freibleiben und so als Transportfläche dienen.

Die bei der Erfindung aus der Längsseite 52 herausragende und als Lichtaustrittsfläche dienende weitere Grenzfläche 58 hat keine Funktion als Transportfläche zu erfüllen und kann daher beliebig für die Umlenkung und Bündelung des ausgekoppelten Lichtes optimiert werden.

Diese räumliche Trennung der für Lichttransport und Lichtauskopplung erforderlichen Grenzflächen des Lichtleiters erlaubt eine verbesserte Optimierung jeder einzelnen der Grenzflächen in Bezug auf ihre Aufgabe des Lichttransports oder der Lichtauskopplung.

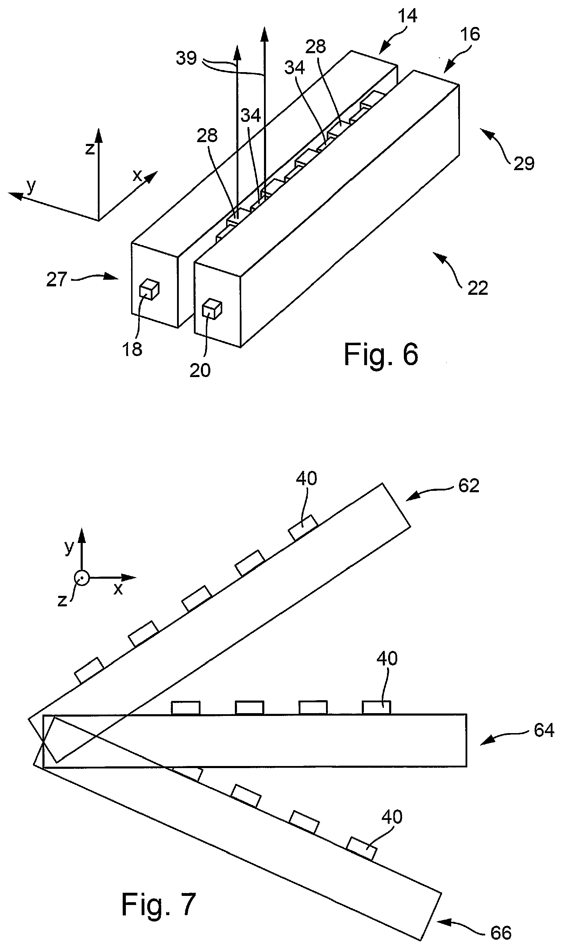

Fig. 6 ist eine perspektivische Darstellung des Lichtmodules 22 aus der Fig. 1 und verdeutlicht insbesondere die Auskopplung von Licht 39 aus den Lichtaustrittsflächen 28 und 34 des ersten Lichtleiters 14 und des zweiten Lichtleiters 16.

Mit dieser Anordnung lassen sich die folgenden Vorteile und Eigenschaften erzielen: Die Abstrahlung des Lichtes 39 erfolgt über die Lichtaustrittsflächen 28, 34 der miteinander verzahnten Auskoppelelemente 26, 32 des ersten Lichtleiters 14 und des zweiten Lichtleiters 16. Dem Betrachter erscheint das Lichtmodul 22 daher als Lichtband, dessen Breite etwa der Breite des Spaltes zwischen dem ersten Lichtleiter 14 und dem zweiten Lichtleiter 16 entspricht. Die Spaltbreite kann auf sehr kleine Werte bis unter 3 mm verringert werden.

Die Lichtfarbe kann variiert werden, indem man Licht unterschiedlicher Farbe abgebende Lichtquellen 18, 20 verwendet, um Licht in die beiden Lichtleiter 14, 16 einzukoppeln. Mit entweder rotes oder gelbes oder weißes Licht abgebenden Lichtquellen, insbesondere LEDs, lassen sich damit die Kombinationen rot-weiß, rot-gelb, weiß-gelb verwirklichen, wobei rot für Schlusslichtfunktionen und Bremslichtfunktionen, weiß für Tagfahrlichtfunktionen und Positionslichtfunktionen und gelb für Blinklichtfunktionen gebräuchlich sind.

Die bekannten für Lichtleiter verwendeten Materialien wie PC (Polycarbonat) und PMMA (Polymethylmetacrylat) besitzen die unerwünschte Eigenschaft einer von der Lichtwellenlänge abhängigen Absorption. Dies führt bei einem mit weißem Licht betriebenen Lichtleiter bei Abständen vom Ort der Einkopplung des Lichtes, die größer als ca. 250 mm sind, zu einer Farbänderung in Richtung gelb. Koppelt man nun weißes Licht in einen der beiden Lichtleiter 14, 16 von vorne und in den anderen Lichtleiter 16, 14 von hinten ein, nimmt das Auge an jeder Stelle des Lichtbandes eine Überlagerung der beiden jeweils vorhandenen eher gelbweißen Farbtöne wahr. In der Wahrnehmung des Betrachters ergibt sich damit über der Länge des Lichtbandes eine geringere Änderung der Farbe als dies bei einer einseitigen Einkopplung des Lichtes der Fall wäre.

Eine bevorzugte Ausgestaltung sieht also vor, dass die Beleuchtungseinrichtung eine erste Lichtquelle aufweist, die weißes Licht emittiert und in den ersten Lichtleiter einkoppelt und eine zweite Lichtquelle aufweist, die weißes Licht emittiert und in den zweiten Lichtleiter einkoppelt, und dass die erste Lichtquelle 18 und die zweite Lichtquelle 20 so angeordnet sind, dass ihr Licht in zueinander entgegengesetzten Richtungen durch die Lichtleiter 14, 16 propagiert.

Die Fig. 6 zeigt eine Ausgestaltung, bei der die erste Lichtquelle 18 und die zweite Lichtquelle 20 am gleichen Ende 27 der Anordnung aus dem ersten Lichtleiter 14 und dem zweiten Lichtleiter 16 angeordnet sind. In diesem Fall propagiert das Licht beider Lichtquellen in gleicher Richtung durch die Lichtleiteranordnung, nämlich von einem ersten Ende 27 zu einem zweiten Ende 29 der Anordnung aus dem ersten Lichtleiter 14 und dem zweiten Lichtleiter 16. Das erste Ende 27 und das zweite Ende 29 sind durch ein dazwischen liegendes Volumen des Lichtleiters 14 und/oder des Lichtleiters 16 voneinander getrennt.

Bei der Ausgestaltung, bei der weißes Licht in entgegengesetzten Richtungen durch die beiden Lichtleiter 14 und 16 propagieren soll, ist bevorzugt eine der beiden Lichtquellen, beispielsweise die erste Lichtquelle 18, am ersten Ende 27 der Anordnung aus dem ersten Lichtleiter 14 und dem zweiten Lichtleiter 16 angeordnet, während die jeweils andere Lichtquelle, beispielsweise die zweite Lichtquelle 16, am zweiten Ende 29 der Anordnung aus dem ersten Lichtleiter 14 und dem zweiten Lichtleiter 16 angeordnet ist.

Natürlich müssen die Auskoppelelemente des Lichtleiters, in den das Licht von hinten eingekoppelt wird, entsprechend ausgerichtet werden. Aus den Figuren 2 bis 5 ergibt sich eine bestimmte Ausrichtung des sich über einer dreieckigen Grundfläche erhebenden Auskoppelelements. Diese Ausrichtung zeichnet sich dadurch aus, dass in das Auskoppelelement eintretendes Licht an der Hypotenusenseite umgelenkt und über eine der Kathetenseiten in z-Richtung ausgekoppelt wird. Die Hypotenusenseite ist dabei der Stirnseite zugewandt, die der Stirnseite gegenüberliegt, an der die Lichtquelle 38 angeordnet ist. Die zur Auskopplung dienende Kathetenseite ist so ausgerichtet, dass ihre Flächennormale in die z-Richtung weist.

Wenn die Lichtquelle 38 an der anderen Stirnseite des Lichtleiters angeordnet ist, muss das Auskoppelelement entsprechend angeordnet sein: Auch dann gilt, dass die Hypotenusenseite der Stirnseite zugewandt ist, die der Stirnseite gegenüberliegt, an der die Lichtquelle 38 angeordnet ist, und dass die zur Auskopplung dienende Kathetenseite so ausgerichtet ist, dass ihre Flächennormale in die z-Richtung weist. Das Auskoppelelement kann auch eine andere Form haben als die Form mit der dreieckigen Grundfläche. Wesentlich ist, dass eine als Umlenkfläche dienende Seite des Auskoppelelements Licht, das in das Auskoppelelement eintritt, direkt zur Lichtaustrittsfläche des Auskoppelelements umlenkt.

Durch eine Variation der Größe und der damit einhergehenden Effektivität der Auskoppelelemente in Abhängigkeit vom Abstand zur Lichteinkopplung kann der erwünschte Effekt der Verwischung der Farbänderung noch weiter vergrößert werden, so dass schließlich kein Farbumschlag mehr erkennbar ist. Eine dazu geeignete Ausgestaltung zeichnet sich dadurch aus, dass die Auskoppelemente eines Lichtleiters jeweils mit zunehmenden Abstand vom Ort der Lichteinkopplung in diesen Lichtleiter verkleinert werden. Dies führt dazu, dass in geringem Abstand vom Ort der Einkopplung viel weißes Licht und in größerem Abstand vergleichsweise weniger gelbes Licht ausgekoppelt wird. In der Überlagerung mit dem aus dem zweiten Lichtleiter ausgekoppelten Licht führt dies dazu, dass das weiße Licht das gelbe Licht jeweils überstrahlt.

Es versteht sich, dass diese Ausgestaltungen nicht auf eine Verwendung von weißem Licht beschränkt sind, sondern dass die Ausführungen auch für andere Anwendungen gültig sind, bei denen gleichfarbiges Licht in die beiden Lichtleiter 14, 16 eines Lichtmoduls 22 eingekoppelt wird.

Eine bevorzugte Ausgestaltung sieht vor, dass die Lichteinkopplung in die beiden Lichtleiter so variierbar ist, dass in einem ersten Betriebszustand Licht nur in einen der beiden Lichtleiter eingekoppelt wird, während in einem zweiten Betriebszustand Licht in beide Lichtleiter eingekoppelt wird. Diese Ausgestaltung wird bevorzugt dadurch realisiert, dass die beiden Lichtquellen, separat einschaltbar und ausschaltbar sind. Dabei wird hier, wie auch in der übrigen Anmeldung, unter einer Lichtquelle eine Quelle des Lichts im Wortsinne verstanden, unabhängig davon, ob es sich um eine einzelne LED oder um eine Gruppe zusammen steuerbarer LEDs oder eine oder mehrere andere Lichtquellen wie Glühlampen oder Gasentladungslampen, etc., handelt. Das Lichtmodul weist also zumindest getrennt voneinander aktivierbare Lichtquellen auf. Dies impliziert zumindest getrennte Leitungen als Bestandteil des Lichtmoduls, ggf. auch separat ansteuerbare Schalter, sofern diese in das Lichtmodul integriert sind.

Die getrennt voneinander aktivierbaren Lichtquellen sind in einer Ausgestaltung Leuchtdioden, die Licht unterschiedlicher Farbe emittieren. In einer Ausgestaltung wird die gelbe Lichtquelle eines Blinklichtes mit dem weißen Licht einer gedimmten weißen Lichtquelle unterstützt. Dies setzt natürlich voraus, dass die resultierende Mischfarbe im vorgeschriebenen Farbbereich der Lichtfunktion, hier der Blinklichtfunktion, bleibt. Das ist besonders vorteilhaft, wenn eine Leuchte mit geringer Stückzahl durch diese Maßnahme nationale Vorschriften erfüllen kann, die mit den Lichtquellen der einen Lichtfunktion nicht erfüllt werden können. Es sind jedoch auch Fälle denkbar, in denen eine weiße Lichtfunktion durch gelbe Lichtquellen unterstützt wird.

Diese Ausgestaltungen haben den Vorteil, dass sie eine Realisierung einer Lichtfunktion mit zwei Helligkeitsniveaus erlauben. Bei niedrigem Helligkeitsniveau wird Licht nur in einen der beiden Lichtleiter eingekoppelt, während bei höherem Lichtniveau Licht in beide Lichtleiter eingekoppelt wird. Eine solche Leuchte ist zum Beispiel als hochgesetzte dritte Bremsleuchte mit gesteigerter Warnfunktion (durch gesteigerte Helligkeit) mit Vorteil verwendbar.

Bisher wurden geradlinig verlaufende Lichtleiter betrachtet. Die Erfindung ist jedoch nicht auf Beleuchtungseinrichtungen mit geradlinig verlaufenden Lichtleitern beschränkt, sondern sie kann auch mit dreidimensional im Raum gekrümmt verlaufenden Lichtleitern verwirklicht werden. Für Krümmungen, deren Krümmungsradius in einer quer zur Lichtabstrahlrichtung liegenden Ebene liegt, ändert sich nichts. Die Achse, um die der Lichtleiter herum gekrümmt verläuft, liegt in diesem Fall parallel zur Lichtabstrahlrichtung, also zum Beispiel parallel zu einer Fahrtrichtung z.

Für Krümmungen, deren Krümmungsradius in einer Ebene mit der gewünschten Lichtabstrahlrichtung liegt, muss dagegen insbesondere die Lichtumlenkfläche so angeordnet werden, dass sie das Licht in die gewünschte Richtung umlenkt. Die Umlenkfläche ist beim Gegenstand der Figur 4 die Grenzfläche 56 des Auskoppelelements.

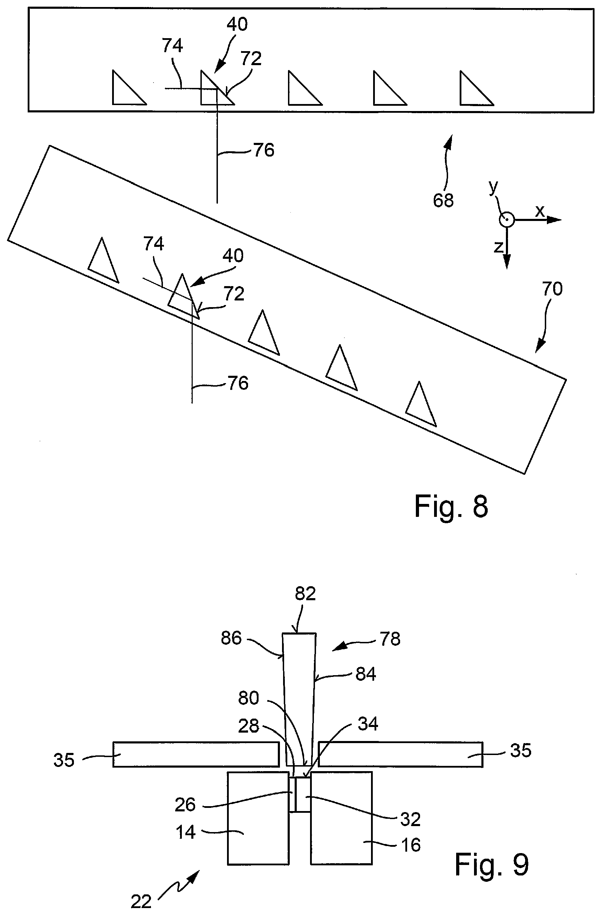

Die Figuren 7 und 8 veranschaulichen diese Zusammenhänge: Man kann sich einen dreidimensional gekrümmten Lichtleiter aus kurzen und geraden Lichtleiterstücken zusammengesetzt denken.

Figur 7 zeigt drei solche Lichtleiterstücke 62, 64, 66, die um eine zur gewünschten Lichtabstrahlrichtung z parallele Drehachse gegeneinander verdreht sind. Eine Krümmung, wie sie durch eine solche Verdrehung repräsentiert wird, wirkt sich auf die Lichtabstrahlrichtung nicht aus: Unter der Voraussetzung, dass die Auskoppelelemente 40 der Lichtleiterstücke 62, 64, 66 untereinander gleich gestaltet und relativ zum Rest des jeweiligen Lichtleiterstücks gleich angeordnet sind, ändert sich die Lichtabstrahlrichtung nicht: Wenn das Lichtleiterstück 62 Licht in die senkrecht zur Papierebene weisende Richtung z abstrahlt, strahlen auch die gegenüber dem Lichtleiterstück 62 um eine zur z-Richtung parallele Drehachse verdrehten Lichtleiterstücke 64 und 66 ihr Licht in die gleiche Richtung ab.

Für eine Krümmung, deren Krümmungsradius in der Lichtabstrahlrichtung z liegt, gilt dies jedoch nicht. Dieser Fall ist in der Figur 8 dargestellt.

Auch hier kann man sich den gekrümmten Lichtleiter aus kurzen und geraden Lichtleiterstücken 68, 70 zusammengesetzt denken, die um eine zur Hochachse y des Kraftfahrzeugs parallele Drehachse gegeneinander verdreht sind. Figur 8 zeigt, dass diese Art der Drehung, die eine Krümmung des Lichtleiters in der zur Fahrbahne parallelen Ebene repräsentiert, durch eine Änderung des Anstellwinkels der als Lichtumlenkfläche dienenden Grenzfläche des Auskoppelelementes kompensiert werden kann.

Der kompensierende Effekt wird für eine bevorzugte Ausgestaltung erzielt, bei der die Flächennormale der Umlenkfläche 72 des Auskoppelelements 40 mit der Winkelhalbierenden des Winkels zwischen dem auf die Umlenkfläche 72 einfallenden Strahl 74 und dem von der Umlenkfläche 72 wegführenden, reflektierten Strahl 76 bildet. Allerdings sind Änderungen der Lage der Umlenkfläche enge Grenzen gesetzt, da schon nach kleinen Änderungen unter Umständen keine internen Totalreflexionen mehr an der Umlenkfläche stattfinden. Um eine unerwünschte Auskopplung von Licht über die Lichtumlenkflächen 72 zu vermeiden, sieht eine bevorzugte Ausgestaltung vor, dass die Umlenkflächen 72 mit einem reflektierenden Belag beschichtet sind. Ein solcher Belag weist bevorzugt eine aufgedampfte metallische Schicht auf. Eine Verdrehung des Lichtleiters um eine zur Führungslinie des Lichtleiters parallele Achse, also eine Verdrillung, erlaubt eine Änderung des Abstrahlwinkels relativ zur Fahrbahn, also gewissermaßen eine Änderung der Elongation des abgestrahlten Lichtes.

Figur 9 zeigt eine weitere Ausgestaltung, die sich dadurch auszeichnet, dass die Beleuchtungseinrichtung wenigstens einen Lichtleiter 78 aufweist, der eine Lichteintrittsfläche 80 und eine Lichtaustrittsfläche 82 aufweist, wobei die Lichteintrittsfläche 80 so angeordnet ist, dass sie von Lichtaustrittsflächen 28, 34 der Auskoppelelemente 26, 32 des ersten Lichtleiters 14 und des zweiten Lichtleiters 16 beleuchtet wird.

Diese Ausgestaltung hat den besonderen Vorteil, dass das sehr schmale Lichtband, das von der erfindungsgemäßen Beleuchtungseinrichtung generiert wird, eine sehr schmale Lichteintrittsfläche 80 des Lichtleiters 78 ermöglicht, ohne dass zwischen dem Austreten des Lichtes aus den Auskoppelelementen 26, 32 des ersten Lichtleiters 14 und des zweiten Lichtleiters 16 und dem Eintreten des Lichtes in den Lichtleiter 78 große Lichtverluste auftreten.

Bevorzugt ist auch, dass der Lichtleiter 78 einen sich in der Propagationsrichtung des durch den Lichtleiter 78 propagierenden Lichtes aufweitenden Querschnitt besitzt, der von intern totalreflektierenden Seitenwänden 84, 86 begrenzt wird. Dadurch ist das Licht, das aus der Lichtaustrittsfläche 82 des Lichtleiters 78 austritt, paralleler ausgerichtet, als das Licht, das in den Lichtleiter 78 eintritt. Diese Parallelisierung ergibt sich als Folge des Zusammenwirkens des sich aufweitenden Querschnitts mit dem Brechungsgesetz.

In einer besonders bevorzugten Ausgestaltung ist der Querschnitt des Lichtleiters 78 trapezförmig. Durch die sehr schmale Lichteintrittsfläche der Vorsatzoptik, deren Breite bevorzugt dem Abstand zwischen den beiden Lichtleitern entspricht oder nur geringfügig, insbesondere weniger als 15% größer als dieser Abstand ist, kann ein vergleichsweise großer Winkel zwischen den beiden nicht parallelen Seiten 84, 86 des Trapezes gewählt werden, ohne dass der Lichtleiter 78 insgesamt unerwünscht voluminös und schwer wird. Ein großer Winkel bewirkt eine stärkere Parallelisierung als ein kleinerer Winkel und ist daher erwünscht. Dies gilt analog auch für von der Trapezform abweichende, sich aufweitende Querschnitte der Vorsatzoptik.

Weitere Ausgestaltungen sehen vor, dass die Lichteintrittsfläche 80 und/oder die Lichtaustrittsfläche 82 des Lichtleiters 78 Streuoptiken aufweist. Solche Streuoptiken, die als brechende Grenzflächen von Erhebungen oder Vertiefungen auf den genannten Flächen realisiert sind, erlauben eine gewünschte Beeinflussung der Lichtverteilung, die von der Beleuchtungseinrichtung erzeugt wird.

Bevorzugt ist auch, dass die das Licht leitenden Lichtleiter 14, 16 des Lichtmoduls 22 hinter einem Bezel 35 (Abdeckrahmen, Blende) angeordnet sind, der eine ein Fenster 37 bildende Öffnung vor den im Spalt zwischen den beiden Lichtleitern 14, 16 liegenden Auskoppelelementen 26, 32 aufweist. Dies hat den Vorteil, dass man nur ein sehr schlankes Teil leuchten sieht, während die massiven Volumina der Lichtleiter 14, 16 der Beleuchtungseinrichtung 10 durch den Bezel 35 verdeckt werden.

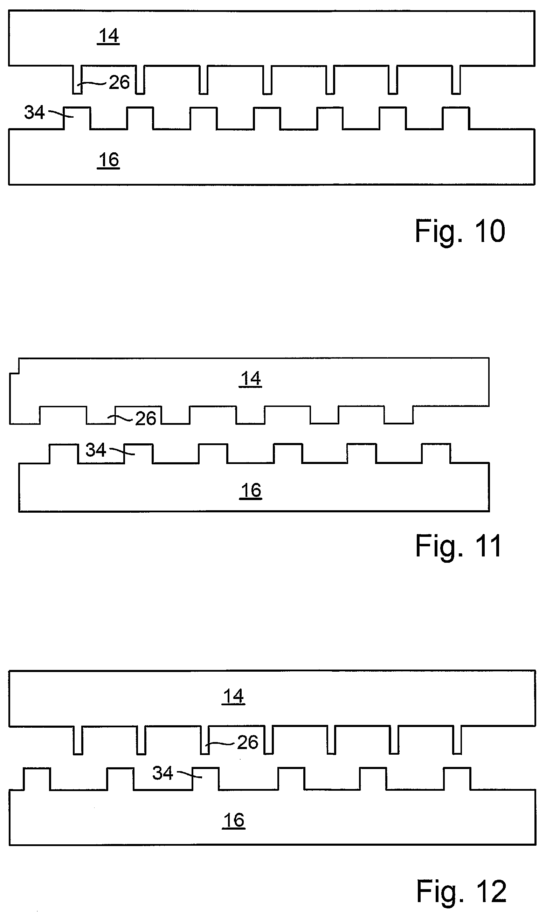

Die Erfindung ist nicht auf die in Figur 1 dargestellte reißverschlussartige Anordnung von auf beiden Lichtleitern untereinander und von Lichtleiter zu Lichtleiter gleichgroßen Auskoppelelementen beschränkt. Weitere Ausgestaltungen von Anordnungen und Größen von Auskoppelelementen sind in den Figuren 10 bis 15 dargestellt.

Figur 10 zeigt eine Ausgestaltung, bei der jeweils ein Auskoppelelement des ersten Lichtleiters 14 und ein Auskoppelelement des zweiten Lichtleiters 16 ein Paar von Auskoppelelementen bilden. Dabei sind die Auskoppelelemente eines Paares nebeneinander oder übereinander angeordnet. Die Auskoppelelemente eines Lichtleiters können gleich groß oder unterschiedlich groß sein. Die Größen und Abstände der Auskoppelelemente sind dabei so, dass sich innerhalb jedes Paares eine von Paar zu Paar jeweils gleiche Anordnung des Auskoppelelements des einen Lichtleiters zu dem Auskoppelelement des anderen Lichtleiters ergibt.

Sämtliche Figuren 10 bis 15 zeigen Ausgestaltungen, bei denen die Auskoppelelemente eines Lichtleiters untereinander jeweils gleich groß sind.

Figur 11 zeigt eine Ausgestaltung, bei der die Auskoppelelemente 26 eines Lichtleiters 14 versetzt zu den Auskoppelelementen 34 des anderen Lichtleiters 16 angeordnet sind. Anders als beim Gegenstand der Figur 1 sind die Auskoppelelemente 26, 34 beider Lichtleiter 14, 16 aber nicht miteinander verzahnt. Im Übrigen sind die Auskoppelelemente dieser Ausgestaltung alle gleich groß und, bezogen auf ihren Lichtleiter, im gleichen Abstand voneinander angeordnet.

Figur 12 zeigt eine Ausgestaltung, bei der sich die Auskoppelelemente 26 eines Lichtleiters 14 in ihrer Größe von den Auskoppelelementen 34 des anderen Lichtleiters 16 unterscheiden. Dabei sind die Auskoppelelemente eines Lichtleiters jeweils untereinander gleich groß und in gleichem Abstand voneinander angeordnet. Die Abstände der Auskoppelelemente des einen Lichtleiters unterscheiden sich von den Abständen der Auskoppelelemente des jeweils anderen Lichtleiters. Figur 12 repräsentiert darüber hinaus eine Ausgestaltung, bei der die Zahl der Auskoppelelemente des einen Lichtleiters von der Zahl der Auskoppelelemente des jeweils anderen Lichtleiters verschieden ist und bei der sich die Auskoppelelemente eines Lichtleiters in ihrer Größe von den Auskoppelelementen des jeweils anderen Lichtleiters unterscheiden.

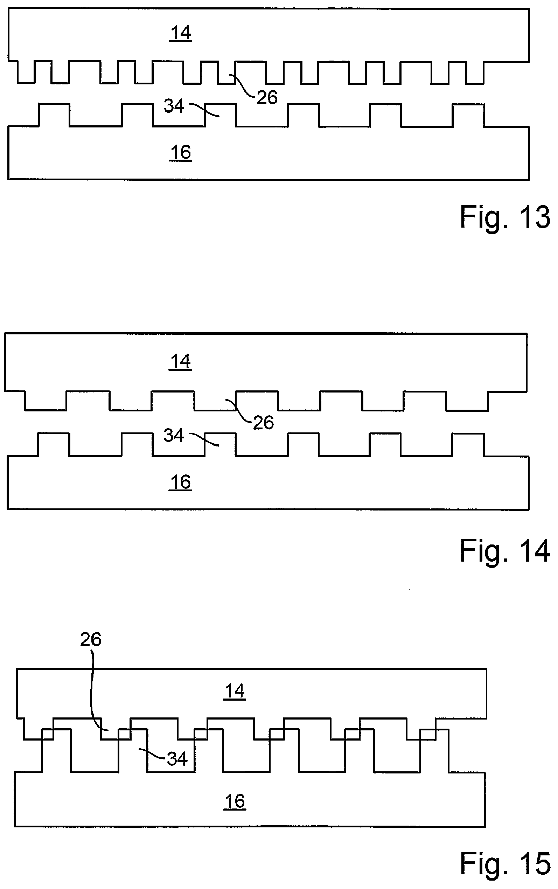

Figur 13 zeigt eine Ausgestaltung, bei der der Abstand zwischen Auskoppelelementen 26 eines Lichtleiters 14 voneinander nicht konstant ist, während die Auskoppelelemente 34 des anderen Lichtleiters 16 einen konstanten Abstand voneinander aufweisen.

Figur 14 zeigt eine Ausgestaltung, bei der sich die Auskoppelelemente des einen Lichtleiters in ihrer Größe von den Auskoppelelementen des anderen Lichtleiters unterscheiden.

Figur 15 zeigt eine Ausgestaltung, bei der die Größen und Formen der Auskoppelelemente eines Lichtleiters jeweils gleich sind, während sich die Größe und Form eines Auskoppelelements des einen Lichtleiters von der Größe und Form des anderen Lichtleiters unterscheidet. Darüber hinaus repräsentiert Figur 15 eine Ausgestaltung, bei der die Auskoppelelemente der beiden Lichtleiter sich teilweise überlappend hintereinander angeordnet sind.

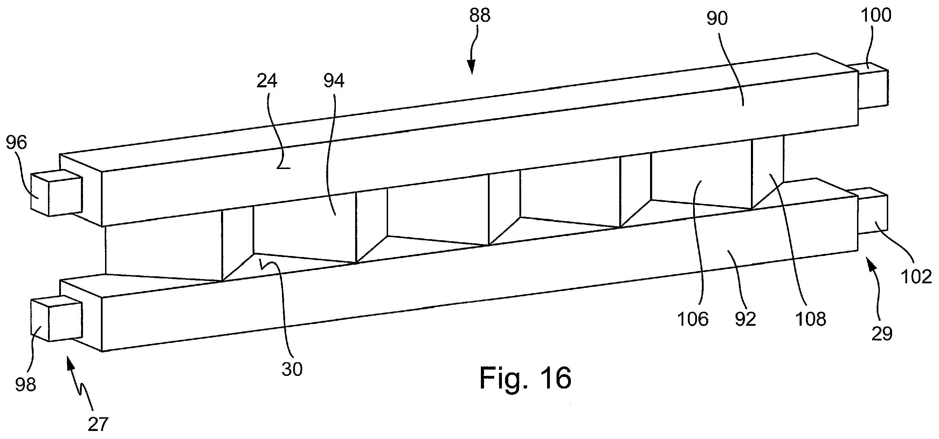

Figur 16 zeigt eine bevorzugte Ausgestaltung, bei der der erste Lichtleiter und der zweite Lichtleiter als Teilvolumina eines einstückig zusammenhängenden Lichtleitervolumens 88 realisiert sind.

Auch die Figur 16 zeigt daher eine Beleuchtungseinrichtung, die einen ersten Lichtleiter in Form eines ersten Teilvolumens 90 und einen zweiten Lichtleiter in Form eines zweiten Teilvolumens 92 aufweist, der der ersten Form des ersten Lichtleiters folgend gestaltet und benachbart zum ersten Lichtleiter verlaufend angeordnet ist, wobei der erste Lichtleiter eine erste Längsseite 24 mit ersten Auskoppelelementen 94 aufweist, die aus der ersten Längsseite 24 herausragen und die erste Lichtaustrittsflächen aufweisen, der zweite Lichtleiter eine zweite Längsseite 30 mit zweiten Auskoppelelementen 94 aufweist, die aus der zweiten Längsseite 30 herausragen und zweite Lichtaustrittsflächen aufweisen, und wobei die beiden Lichtleiter relativ zueinander so angeordnet sind, dass die zweite Längsseite 30 der ersten Längsseite 24 gegenüberliegt. Die Auskoppelelemente 94 beider Lichtleiter sind bei dieser einstückigen Ausgestaltung miteinander identisch. Mit anderen Worten: Die beiden Teilvolumina 90, 92 teilen sich jeweils ihre Auskoppelelemente 94. Jedes Auskoppelelement 94 besitzt eine dem ersten Teilvolumen 90 zugewandte Seite, mit der es in das erste Teilvolumen 90 übergeht und eine dem zweiten Teilvolumen 92 zugewandte Seite, mit der es in das zweite Teilvolumen 92 übergeht. Die beiden Seiten liegen sich gegenüber und sind durch das dazwischen liegende Volumen des Auskoppelelements 94 voneinander getrennt.

Die Ausgestaltung, die in der Figur 16 dargestellt ist, ist dazu eingerichtet, dass sowohl das erste Teilvolumen 90, als auch das zweite Teilvolumen 92 sowohl an einer ersten Stirnseite, beziehungsweise an einem ersten Ende 27, als auch an einer zweiten Stirnseite, beziehungsweise an einem zweiten Ende 29, Licht eingekoppelt bekommt. Dazu sind bevorzugt vier LEDs 96, 98, 100, 102 als Lichtquellen vorgesehen, von denen jede an einer Lichteintrittsfläche, also einer Stirnseite, an einem der beiden Enden 27, 29 der Teilvolumina 90, 92 so angeordnet ist, dass ihr Licht über die zugehörige Lichteintrittsfläche in das Lichtleitervolumen 88 eingekoppelt wird.

In einer bevorzugten Ausgestaltung sind die beiden an einem Ende 27 angeordneten Lichtquellen 96, 98 gelbes Licht abgebende LEDs, um ein Blinklichtmodul zu verwirklichen, während die anderen beiden Lichtquellen 100, 102, die an dem anderen Ende 29 angeordnet sind, weißes Licht abgebende LEDs sind, mit denen eine Tagfahrlicht- und/oder Positionslicht-Lichtfunktion realisiert wird. Bei diesen Ausgestaltungen kann eine zweistufige Helligkeit realisiert werden, wie sie weiter oben bereits erläutert worden ist. Die zweistufige Helligkeit wird also dadurch realisiert, dass in einer ersten Stufe Licht nur in eines der beiden Teilvolumina 90, 92 eingekoppelt wird, während für eine zweite, hellere Stufe, Licht in beide Teilvolumina 90, 92 eingekoppelt wird.

In einer alternativ bevorzugten Ausgestaltung wird an beiden Enden 27, 29 jeweils ein Paar aus einer weißes Licht abgebenden LED und einer gelbes Licht abgebenden LED eingesetzt.

Die Auskoppelelemente weisen in der Ausgestaltung, die in der Figur 16 dargestellt ist, zwei Arten von Umlenkflächen 106, 108 auf, je eine Art für jedes der beiden Licht einkoppelnde Lichtquellen aufweisenden Enden. Beide Arten von Umlenkflächen 106, 108 reflektieren das auf sie einfallende Licht dann auf dieselbe Lichtaustrittsfläche. Die einen Umlenkflächen 106 sind dem einen Ende 27 zugewandt, während die anderen Umlenkflächen dem anderen Ende 29 zugewandt sind.

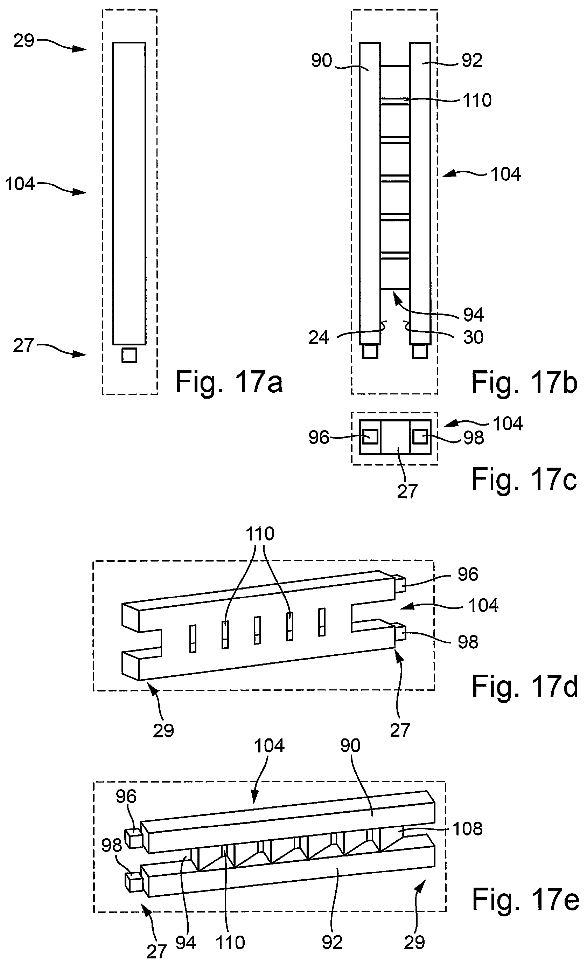

Figur 17 zeigt eine weitere Ausgestaltung eines einstückig zusammenhängenden Lichtleitervolumens 104. Auch bei dieser Ausgestaltung sind der erste Lichtleiter und der zweite Lichtleiter als Teilvolumina des einstückig zusammenhängenden Lichtleitervolumens 104 realisiert.

Dabei zeigt die Fig. 17a eine Seitenansicht einer Längsseite des Lichtleitervolumens 104, die Fig. 17b eine Draufsicht auf das Lichtleitervolumen 104, die Figur 17c eine Ansicht des zur Lichteinkopplung dienenden Endes 27 des Lichtleitervolumens 104, die Fig. 17 d eine perspektivische Ansicht des Lichtleitervolumens 104 mit dem Betrachter zugewandten Lichtaustrittsflächen und die Fig. 17e eine perspektivische Ansicht des Lichtleitervolumens 104 mit dem Betrachter zugewandten Umlenkflächen.

Auch die Figur 17 zeigt eine Beleuchtungseinrichtung, die einen ersten Lichtleiter in Form eines ersten Teilvolumens 90 und einen zweiten Lichtleiter in Form eines zweiten Teilvolumens 92 aufweist, der der ersten Form des ersten Lichtleiters folgend gestaltet und benachbart zum ersten Lichtleiter verlaufend angeordnet ist, wobei der erste Lichtleiter eine erste Längsseite 24 mit ersten Auskoppelelementen 94 aufweist, die aus der ersten Längsseite 24 herausragen und die erste Lichtaustrittsflächen aufweisen, der zweite Lichtleiter eine zweite Längsseite 30 mit zweiten Auskoppelelementen 94 aufweist, die aus der zweiten Längsseite 30 herausragen und zweite Lichtaustrittsflächen aufweisen, und wobei die beiden Lichtleiter relativ zueinander so angeordnet sind, dass die zweite Längsseite 30 der ersten Längsseite 24 gegenüberliegt. Die Auskoppelelemente 94 beider Lichtleiter sind bei dieser einstückigen Ausgestaltung miteinander identisch. Mit anderen Worten: Die beiden Teilvolumina 90, 92 teilen sich jeweils ihre Auskoppelelemente 94. Jedes Auskoppelelement 94 besitzt eine dem ersten Teilvolumen 90 zugewandte Seite, mit der es in das erste Teilvolumen 90 übergeht und eine dem zweiten Teilvolumen 92 zugewandte Seite, mit der es in das zweite Teilvolumen 92 übergeht. Die beiden Seiten liegen sich gegenüber und sind durch das dazwischen liegende Volumen des Auskoppelelements 94 voneinander getrennt.

Im Unterschied zum Gegenstand der Figur 16 ist das Lichtleitervolumen 104 nach Figur 17 dazu eingerichtet, nur an einem Ende 27 seiner beiden Enden 27, 29 Licht eingekoppelt zu bekommen. Dies ergibt sich daraus, dass das Lichtleitervolumen nach Figur 17 lediglich eine Art von Auskoppelflächen 108 aufweist. Diese sind alle dazu eingerichtet, Licht, das von einem Ende 27 des Lichtleitervolumens 104 her in das Lichtleitervolumen 104 eingespeist wird und in die Auskoppelelemente 94 eintritt, zu den Lichtaustrittsflächen der Auskoppelelemente 94 umzulenken, über die das Licht aus dem Lichtleitervolumen 104 austritt.

Die einzelnen Lichtaustrittsflächen sind beim Gegenstand der Figur 17 durch Ausnehmungen 110 voneinander getrennt. Dies stellt jedoch lediglich eine mögliche Ausgestaltung dar. In einer alternativen Ausgestaltung gehen die Lichtaustrittsflächen der Auskoppelelemente 94 ineinander über. Auch für den Gegenstand der Figur 17 gilt, dass sowohl gelbes als auch weißes und/oder rotes Licht abgebende LEDs als Lichtquellen verwendet werden können. Auch hier gilt, dass diese Lichtquellen jeweils so nah an einer Lichteintrittsfläche eines lichtleitenden Teilvolumens des Lichtleitervolumens angeordnet sind, dass von ihnen ausgehendes Licht in das jeweilige Teilvolumen eingekoppelt wird.

Für sämtliche in dieser Anmeldung vorgestellten Ausgestaltungen, die gleichfarbiges Licht abgebende Lichtquellen verwenden, ergeben sich die folgenden Vorteile: Für die Lichtfarbe, die bei dieser Ausgestaltung über zwei Lichteintrittsflächen eingespeist wird, ergibt sich als Vorteil zum einen eine Halbierung der Temperaturbelastung an den Lichteintrittsflächen. Dies ist vorteilhaft, um eine thermische Degradation des Lichtleitermaterials zu vermeiden, bei der das Lichtleitermaterial mit steigendem Wert des Produktes aus Temperatur und Zeit vergilbt. Ein weiterer Vorteil ergibt sich speziell für Blinklichtfunktionen. Hier trägt die Verwendung von zwei LEDs dazu bei, die geringe Lichtleistung von auf dem Markt verbreiteten, gelbes Licht abgebenden LEDs auszugleichen.

## Patentansprüche

1. Beleuchtungseinrichtung (10) für ein Kraftfahrzeug, die einen ersten Lichtleiter (14) und einen zweiten Lichtleiter (16) aufweist, der der Form des ersten Lichtleiters (14) folgend gestaltet und benachbart zum ersten Lichtleiter (14) verlaufend angeordnet ist, wobei der erste Lichtleiter (14) eine erste Längsseite (24) mit ersten Auskoppelelementen (26) aufweist, die quer zu einer Hauptausbreitungsrichtung x des Lichtes im ersten Lichtleiter (14) und im zweiten Lichtleiter (16) aus der ersten Längsseite (24) herausragen und die erste Lichtaustrittsflächen (28) aufweisen, der zweite Lichtleiter (16) eine zweite Längsseite (30) mit zweiten Auskoppelelementen (32) aufweist, die aus der zweiten Längsseite (30) herausragen und zweite Lichtaustrittsflächen (34) aufweisen, und wobei die beiden Lichtleiter (14, 16) relativ zueinander so angeordnet sind, dass die zweite Längsseite (30) der ersten Längsseite (24) gegenüberliegt, **dadurch gekennzeichnet, dass** die beiden Längsseiten in einer zur Hauptausbreitungsrichtung quer liegenden Richtung y einen Spalt begrenzen, der in einer quer zu der x-Richtung und quer zu der y-Richtung liegenden z-Richtung offen ist und dass die Lichtaustrittsflächen in dem Spalt so angeordnet sind, dass die z-Richtung einer Lichtabstrahlrichtung entspricht.

2. Beleuchtungseinrichtung (10) nach Anspruch 1, **dadurch gekennzeichnet, dass** der erste Lichtleiter (14) und der zweite Lichtleiter (16) als Teilvolumina (90, 92) eines einstückig zusammenhängenden Lichtleitervolumens (88) realisiert sind.

3. Beleuchtungseinrichtung (10) nach Anspruch 2, **dadurch gekennzeichnet, dass** das erste Teilvolumen (90) eine erste Längsseite (24) mit Auskoppelelementen (94) aufweist, die aus der ersten Längsseite (24) herausragen, das zweite Teilvolumen (92) eine zweite Längsseite (30) mit Auskoppelelementen (94) aufweist, die aus der zweiten Längsseite (30) herausragen, wobei die Auskoppelelemente (94) beider Teilvolumina (90, 92) miteinander identisch sind.

4. Beleuchtungseinrichtung (10) nach Anspruch 2 oder 3, **dadurch gekennzeichnet, dass** die Beleuchtungseinrichtung (10) dazu eingerichtet ist, dass sowohl das erste Teilvolumen (90) als auch das zweite Teilvolumen (92) sowohl an einer ersten Stirnseite, beziehungsweise an einem ersten Ende (27), als auch an einer zweiten Stirnseite, beziehungsweise an einem zweiten Ende (29), Licht eingekoppelt bekommt.

5. Beleuchtungseinrichtung (10) nach Anspruch 4, **dadurch gekennzeichnet, dass** vier LEDs (96, 98, 100, 102) als Lichtquellen vorgesehen sind, von denen jede an einer Lichteintrittsfläche, also einer Stirnseite, an einem der beiden Enden (27, 29) der Teilvolumina (90, 92) so angeordnet ist, dass ihr Licht über die zugehörige Lichteintrittsfläche in das Lichtleitervolumen (88) eingekoppelt wird.

6. Beleuchtungseinrichtung (10) nach Anspruch 5, **dadurch gekennzeichnet, dass** die Auskoppelelemente (94) zwei Arten von Umlenkflächen (106, 108) aufweisen, je eine Art für jedes der beiden Licht einkoppelnde Lichtquellen aufweisenden Enden (27, 29), wobei die einen Umlenkflächen (106) dem einen Ende (27) zugewandt sind, während die anderen Umlenkflächen (108) dem anderen Ende (29) zugewandt sind.

7. Beleuchtungseinrichtung (10) nach Anspruch 2 oder 3, **dadurch gekennzeichnet, dass** das Lichtleitervolumen (104) dazu eingerichtet ist, nur an einem Ende (27) seiner beiden Enden (27, 29) Licht eingekoppelt zu bekommen.

8. Beleuchtungseinrichtung (10) nach Anspruch 7, **dadurch gekennzeichnet, dass** das Lichtleitervolumen (104) lediglich eine Art von Auskoppelflächen (108) aufweist, die alle dazu eingerichtet sind, Licht, das von einem Ende (27) des Lichtleitervolumens (104) her in das Lichtleitervolumen (104) eingespeist wird und in die Auskoppelelemente (94) eintritt, zu den Lichtaustrittsflächen der Auskoppelelemente (94) umzulenken, über die das Licht aus dem Lichtleitervolumen (104) austritt.

9. Beleuchtungseinrichtung (10) nach Anspruch 8, **dadurch gekennzeichnet, dass** die einzelnen Lichtaustrittsflächen durch Ausnehmungen (110) voneinander getrennt sind.

10. Beleuchtungseinrichtung (10) nach einem der vorhergehenden Ansprüche, **dadurch gekennzeichnet, dass** die Beleuchtungseinrichtung (10) eine erste Lichtquelle (18) aufweist, die weißes Licht emittiert und in den ersten Lichtleiter (14) einkoppelt und eine zweite Lichtquelle (20) aufweist, die weißes Licht emittiert und in den zweiten Lichtleiter (16) einkoppelt, und dass die erste Lichtquelle (18) und die zweite Lichtquelle (20) so angeordnet sind, dass ihr Licht in zueinander entgegengesetzten Richtungen durch die Lichtleiter (14, 16) propagiert.

11. Beleuchtungseinrichtung (10) nach einem der vorhergehenden Ansprüche, **dadurch gekennzeichnet, dass** die Beleuchtungseinrichtung (10) dazu eingerichtet ist, dass die Lichteinkopplung in die beiden Lichtleiter (14, 16) so variierbar ist, dass in einem ersten Betriebszustand Licht nur in einen der beiden Lichtleiter (14, 16) eingekoppelt wird, während in einem zweiten Betriebszustand Licht in beide Lichtleiter (14, 16) eingekoppelt wird.

12. Beleuchtungseinrichtung (10) nach Anspruchll, **dadurch gekennzeichnet, dass** die beiden Lichtquellen, separat einschaltbar und ausschaltbar sind.

13. Beleuchtungseinrichtung (10) nach einem der vorhergehenden Ansprüche, **dadurch gekennzeichnet, dass** eine Flächennormale einer Umlenkfläche (72) des Auskoppelelements (40) eine Winkelhalbierenden des Winkels zwischen einem auf die Umlenkfläche (72) einfallenden Strahl (74) und dem von der Umlenkfläche (72) wegführenden, reflektierten Strahl (76) bildet.

14. Beleuchtungseinrichtung (10) nach einem der vorhergehenden Ansprüche, **dadurch gekennzeichnet, dass** die Umlenkflächen (72) mit einem reflektierenden Belag beschichtet sind.

15. Beleuchtungseinrichtung (10) nach einem der vorhergehenden Ansprüche, **dadurch gekennzeichnet, dass** die Beleuchtungseinrichtung (10) wenigstens einen dritten Lichtleiter (78) aufweist, der eine Lichteintrittsfläche (80) und eine Lichtaustrittsfläche (82) aufweist, wobei die Lichteintrittsfläche (80) so angeordnet ist, dass sie von Lichtaustrittsflächen (28, 34) der Auskoppelelemente (26, 32) des ersten Lichtleiters (14) und des zweiten Lichtleiters (16) beleuchtet wird.

## Claims

1. A lighting device (10) for a motor vehicle, which has a first optical waveguide (14) and a second optical waveguide (16) that is designed to follow the shape of the first optical waveguide (14) and is located extending adjacent to the first optical waveguide (14), and the first optical waveguide (14) has a first long side (24) with first decoupling elements (26), which protrude from the first long side (24) crosswise to a primary propagation direction x of the light in the first optical waveguide (14) and in the second optical waveguide (16) and which have first light output faces (28), and the second optical waveguide (16) has a second long side (30) with second decoupling elements (32), which protrude from the second long side (30) and have second light output faces (34), and the two optical waveguides (14, 16) are located relative to one another such that the second long side (30) is located facing the first long side (24), **characterized in that** the two long sides, in a direction y located transversely to the primary propagation direction, define a gap which is open in a z direction that is located transverse to the x direction and transverse to the y direction; and that the light output faces are located in the gap such that the z direction is equivalent to a light emission direction.

2. The lighting device (10) of claim 1, **characterized in that** the first optical waveguide (14) and the second optical waveguide (16) are realized in the form of partial volumes (90, 92) of an integrally cohesive optical waveguide volume (88).

3. The lighting device (10) of claim 2, **characterized in that** the first partial volume (90) has a first long side (24) with decoupling elements (94), which protrude from the first long side (24); the second partial volume (92) has a second long side (30) with decoupling elements (94), which protrude from the second long side (30); and the decoupling elements (94) of the two partial volumes (90, 92) are identical to one another.

4. The lighting device (10) of claim 2 or 3, **characterized in that** the lighting device (10) is arranged so that light is injected in both the first partial volume (90) and the second partial volume (92), both on a first face end, or in other words on a first end (27), and on a second face end, or in other words on a second end (29).

5. The lighting device (10) of claim 4, **characterized in that** four LEDs (96, 98, 100, 102) are provided as light sources, each of which is located at a light input face, that is, a face end, on one of the two ends (27, 29) of the partial volumes (90, 92), such that its light is injected into the optical waveguide volume (88) via the associated light input face.

6. The lighting device (10) of claim 5, **characterized in that** the decoupling elements (94) have two types of deflection faces (106, 108), one type each for each of the two ends (27, 29) having light- injected light sources, and the one set of deflection faces (106) is oriented toward the one end (27) while the other deflection faces (108) are oriented toward the other end (29).

7. The lighting device (10) of claim 2 or 3, **characterized in that** the optical waveguide volume (104) is arranged so that light is injected at only one end (27) of its two ends (27, 29).

8. The lighting device (10) of claim 7, **characterized in that** the optical waveguide volume (104) has only a single type of decoupling faces (108), which are all arranged for deflecting light, which is fed from one end (27) of the optical waveguide volume (104) into the optical waveguide volume (104) and enters the decoupling elements (94), toward the light output faces of the decoupling elements (94), by way of which light output faces the light outputs from the optical waveguide volume (104).

9. The lighting device (10) of claim 8, **characterized in that** the individual light output faces are separated from one another by recesses (110).

10. The lighting device (10) of one of the foregoing claims, **characterized in that** the lighting device (10) has a first light source (18), which emits white light and injects it into the first optical waveguide (14), and a second light source (20), which emits white light and injects it into the second optical waveguide (16); and that the first light source (18) and the second light source (20) are located such that their light propagates in opposite directions from one another through the optical waveguides (14, 16).

11. The lighting device (10) of one of the foregoing claims, **characterized in that** the lighting device (10) is arranged such that the injection of light into the two optical waveguides (14, 16) is variable, such that in a first operating state, light is injected into only one of the two optical waveguides (14, 16), while in a second operating state, light is injected into both optical waveguides (14, 16).

12. The lighting device (10) of claim 11, **characterized in that** the two light sources can be switched on and off separately.

13. The lighting device (10) of one of the foregoing claims, **characterized in that** a surface normal of a deflection face (72) of the decoupling element (40) forms an angle bisector of the angle between a beam (74) striking the deflection face (72) and the reflected beam (76) leading away from the deflection face (72).

14. The lighting device (10) of one of the foregoing claims, **characterized in that** the deflection faces (72) are coated with a reflective coating.

15. The lighting device (10) of one of the foregoing claims, **characterized in that** the lighting device (10) has at least one third optical waveguide (78), which has a light input face (80) and a light output face (82), and the light input face (80) is located such that it is illuminated by light output faces (28, 34) of the decoupling elements (26, 32) of the first optical waveguide (14) and of the second optical waveguide (16).

## Revendications

1. Dispositif d'éclairage (10) pour véhicule automobile, qui comprend un premier guide de lumière (14) et un deuxième guide de lumière (16) qui est conçu pour épouser la forme du premier guide de lumière (14) et qui est disposé de manière à s'étendre au voisinage du premier guide de lumière (14), le premier guide de lumière (14) comprenant un premier côté longitudinal (24) présentant des premiers éléments d'extraction (26) qui font saillie du premier côté longitudinal (24) transversalement à une direction de propagation principale x de la lumière dans le premier guide de lumière (14) et dans le deuxième guide de lumière (16) et comprennent les premières surfaces de sortie de lumière (28), le deuxième guide de lumière (16) comprenant un deuxième côté longitudinal (30) présentant des deuxièmes éléments d'extraction (32) qui font saillie du deuxième côté longitudinal (30) et comprennent des deuxièmes surfaces de sortie de lumière (34), et les deux guides de lumière (14, 16) étant disposés l'un par rapport à l'autre de manière à ce que le deuxième côté longitudinal (30) soit disposé en face du premier côté longitudinal (24), **caractérisé en ce que** les deux côtés longitudinaux dans une direction y transversale à la direction de propagation principale délimitent une fente qui est ouverte dans une direction z transversale à la direction x et transversale à la direction y, et **en ce que** les surfaces de sortie de lumière sont disposées dans la fente de sorte que la direction z correspond à une direction d'émission de lumière.

2. Dispositif d'éclairage (10) selon la revendication 1, **caractérisé en ce que** le premier guide de lumière (14) et le deuxième guide de lumière (16) sont réalisés sous la forme de volumes partiels (90, 92) d'un volume (88) de guide de lumière continu d'une seule pièce.

3. Dispositif d'éclairage (10) selon la revendication 2, **caractérisé en ce que** le premier volume partiel (90) comprend un premier côté longitudinal (24) présentant des éléments d'extraction (94) qui font saillie du premier côté longitudinal (24), le deuxième volume partiel (92) comprend un deuxième côté longitudinal (30) présentant des éléments d'extraction (94) qui font saillie du deuxième côté longitudinal (30), les éléments d'extraction (94) des deux volumes partiels (90, 92) étant identiques.

4. Dispositif d'éclairage (10) selon la revendication 2 ou 3, **caractérisé en ce que** le dispositif d'éclairage (10) est conçu pour qu'aussi bien le premier volume partiel (90) que le deuxième volume partiel (92) reçoivent la lumière injectée aussi bien sur une première face frontale, ou sur une première extrémité (27), que sur une deuxième face frontale, ou sur une deuxième extrémité (29).

5. Dispositif d'éclairage (10) selon la revendication 4, **caractérisé en ce que** quatre diodes électroluminescentes (96, 98, 100, 102) sont prévues comme sources de lumière, parmi lesquelles chacune est disposée sur une surface d'entrée de lumière, par conséquent une face frontale, à l'une des deux extrémités (27, 29) des volumes partiels (90, 92), de sorte que leur lumière est injectée dans le volume de guide de lumière (88) en passant par la surface d'entrée de lumière associée.

6. Dispositif d'éclairage (10) selon la revendication 5, **caractérisé en ce que** les éléments d'extraction (94) comprennent deux types de surfaces de déviation (106, 108), chacun un type pour chacune des deux extrémités (27, 29) comprenant des sources de lumière injectant de la lumière, les surfaces de déviation (106) étant tournées vers l'une des extrémités (27), tandis que les autres surfaces de déviation (108) étant tournées vers l'autre extrémité (29).

7. Dispositif d'éclairage (10) selon la revendication 2 ou 3, **caractérisé en ce que** le volume (104) de guide de lumière est conçu pour ne recevoir la lumière injectée qu'à une extrémité (27) de ses deux extrémités (27, 29).

8. Dispositif d'éclairage (10) selon la revendication 7, **caractérisé en ce que** le volume (104) de guide de lumière ne comprend qu'un seul type de surfaces d'extraction (108), qui sont toutes conçues pour dévier la lumière, qui est injectée à partir d'une extrémité (27) du volume (104) de guide de lumière dans le volume (104) de guide de lumière et qui pénètre dans les éléments d'extraction (94), en direction des surfaces de sortie de lumière des éléments d'extraction (94), par lesquelles la lumière sort du volume (104) de guide de lumière.

9. Dispositif d'éclairage (10) selon la revendication 8, **caractérisé en ce que** les surfaces de sortie de lumière individuelles sont séparées les unes des autres par des évidements (110).

10. Dispositif d'éclairage (10) selon l'une quelconque des revendications précédentes, **caractérisé en ce que** le dispositif d'éclairage (10) comprend une première source de lumière (18) qui émet une lumière blanche et l'injecte dans le premier guide de lumière (14) et une deuxième source de lumière (20) qui émet de la lumière blanche et l'injecte dans le deuxième guide de lumière (16), et **en ce que** la première source de lumière (18) et la deuxième source de lumière (20) sont disposées de sorte que leur lumière se propage dans des directions opposées les unes aux autres à travers les guides de lumière (14, 16).

11. Dispositif d'éclairage (10) selon l'une quelconque des revendications précédentes, **caractérisé en ce que** le dispositif d'éclairage (10) est conçu pour que l'injection de lumière dans les deux guides de lumière (14, 16) puisse varier, de sorte que dans un premier état de fonctionnement, la lumière n'est injectée que dans un des deux guides de lumière (14, 16), tandis que dans un deuxième état de fonctionnement, la lumière est injectée dans les deux guides de lumière (14, 16).

12. Dispositif d'éclairage (10) selon la revendication 11, **caractérisé en ce que** les deux sources de lumière peuvent être activées et désactivées séparément.

13. Dispositif d'éclairage (10) selon l'une quelconque des revendications précédentes, **caractérisé en ce qu'**une normale à la surface d'une surface de déviation (72) de l'élément d'extraction (40) forme une bissectrice de l'angle formé par un faisceau (74) incident sur la surface de déviation (72) et le faisceau réfléchissant (76) s'écartant de la surface de déviation (72).

14. Dispositif d'éclairage (10) selon l'une quelconque des revendications précédentes, **caractérisé en ce que** les surfaces de déviation (72) sont revêtues d'une garniture réfléchissante.

15. Dispositif d'éclairage (10) selon l'une quelconque des revendications précédentes, **caractérisé en ce que** le dispositif d'éclairage (10) comprend au moins un troisième guide de lumière (78) qui comprend une surface d'entrée de lumière (80) et une surface de sortie de lumière (82), la surface d'entrée de lumière (80) étant disposée de sorte qu'elle est éclairée par les surfaces de sortie de lumière (28, 34) des éléments d'extraction (26, 32) du premier guide de lumière (14) et du deuxième guide de lumière (16).
